# EUROPEAN PATENT SPECIFICATION

(11) **EP 4 184 993 B1**
(45) Date of publication and mention of the grant of the patent: **22.10.2025**
(21) Application number: 21852570.7
(22) Date of filing: 06.08.2021
(51) Int. Cl.: H04W 24/08, H04W 52/32, H04W 52/14, H04W 52/36, H04W 52/42, H04W 52/24, H04B 7/06, H04L 5/00

(54) **BEAM MEASUREMENT METHOD AND APPARATUS**
VERFAHREN UND VORRICHTUNG ZUR STRAHLMESSUNG
PROCÉDÉ ET APPAREIL DE MESURE DE FAISCEAU

(30) Priority: 07.08.2020 CN 202010789073
(43) Date of publication of application: 24.05.2023
(73) Proprietor: Huawei Technologies Co., Ltd., Longgang Shenzhen, Guangdong 518129 (CN)
(72) Inventor: LI, Tie, Shenzhen, Guangdong 518129 (CN); ZHANG, Yongping, Shenzhen, Guangdong 518129 (CN); ZHANG, Qian, Shenzhen, Guangdong 518129 (CN)
(74) Representative: Isarpatent
(86) International application number: PCT/CN2021/111068
(87) International publication number: WO 2022/028555

(56) References cited:
- WO-A1-2020/143761
- CN-A- 109 600 154
- CN-A- 111 436 105
- CN-A- 112 422 160
- US-A1- 2019 141 692
- US-A1- 2022 116 891
- US-B2- 10 462 755
- INTEL CORPORATION: "Beam management enhancements for MPE", 3GPP DRAFT; R1-1910626 BEAM MANAGEMENT ENHANCEMENTS FOR MPE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191018, 5 October 2019 (2019-10-05), Mobile Competence Centre ; 650, route des Lucioles ; F-06921 Sophia-Antipolis Cedex ; France , XP051789418

## Description

### TECHNICAL FIELD

This application relates to the communication field, and in particular, to a beam measurement method, a communication apparatus, a chip, a computer-readable storage medium, and a computer program product.

### BACKGROUND

When a terminal device, for example, a mobile phone, is used, a transmit antenna is relatively close to a brain or another part of a human body. To prevent emitting excessively high electromagnetic energy radiation, some security standards are generally used to determine that there is no excessive electromagnetic energy radiation, thereby ensuring safety when people use the mobile phone. For example, whether an impact of radiation of a terminal device (for example, a mobile phone) on a human body meets the standard may be measured by using a maximum permissible exposure (maximum permissible exposure, MPE) (amount) or a specific absorption rate (Specific Absorption Rate, SAR).

In some communication systems, for example, a 5th generation (5th generation, 5G) system or a new radio (new radio, NR) system, to meet wide-area coverage, both a network device and a terminal device adopt multi-antenna panel deployment, and a beam used for communication between the network device and the terminal device is sent or received by using an antenna panel (antenna panel). Especially for the terminal device, to meet coverage, the antenna panel deployment has more important impact on performance in a case of limited space and cost reduction.

In this case, in a scenario in which the terminal device adopts multi-antenna panel deployment, how to ensure that both system performance and a radiant intensity of the terminal device meet a security standard.

WO 2020/143761 A1 discloses a power control method and apparatus, and an electronic device, wherein the method includes: determining at least one piece of maximum transmit power-related information; and sending the at least one piece of maximum transmit power-related information to a first communication node, wherein each of the at least one piece of maximum transmit power-related information is related to a beam or a beam group.

### SUMMARY

This application provides a beam measurement method, a communication apparatus, a chip, a computer-readable storage medium, and a computer program product, as defined in the appended set of claims, to not only ensure that a radiant intensity of a terminal device meets both a security standard and system performance, but also reduce signaling overheads.

According to a first aspect, a beam measurement method is provided. The method may be performed by a network device, or may be performed by a chip, a chip system, or a circuit configured in a network device. This is not limited in this application.

The method may include: receiving a plurality of uplink reference signals, where each uplink reference signal is transmitted by using a corresponding transmit beam; and determining power reduction information of at least one of the plurality of uplink reference signals based on measurement results of the plurality of uplink reference signals.

Optionally, the transmit beam may be a beam, or may be an antenna panel; or the transmit beam may include a beam and an antenna panel; or the transmit beam may include an antenna (for example, in a low-frequency communication scenario).

For example, power reduction information of an uplink reference signal indicates power reduction information of a transmit beam corresponding to the uplink reference signal. For example, the determining the power reduction information of the uplink reference signal may include: determining whether power of the transmit beam corresponding to the uplink reference signal is backed off, or may include: determining whether power reduction values of transmit beams corresponding to the plurality of uplink reference signals are different.

For example, whether a radiant intensity risk occurs on a terminal device may be determined by determining power reduction information of at least one of the plurality of uplink reference signals. Occurrence of the radiant intensity risk, for example, may also be recorded as occurrence of an MPE problem, or may be recorded as occurrence of an MPE event, or may be recorded as alarm information, which indicates that a radiant intensity exceeds a regulation limit, or radiated power or energy of the terminal device does not meet an act, a decree, or a rule, or a radiant intensity is about to exceed a regulation limit. A specific name does not constitute a limitation on the protection scope of embodiments of this application.

Based on the foregoing technical solution, after receiving a plurality of uplink reference signals sent by a terminal device, the network device determines power reduction information of at least one of the plurality of uplink reference signals based on measurement results of the plurality of uplink reference signals. For example, in some scenarios, if a radiant intensity of a terminal device exceeds or is about to exceed a regulation, the terminal device may transmit data and/or a signal, or the like by using a transmit beam after power reduction, to ensure that the radiant intensity of the terminal device meets a security standard. The network device determines power reduction information of at least one transmit beam based on beam measurement results of a plurality of uplink reference signals transmitted by the terminal device by using a plurality of transmit beams, so as to speculate, based on the power reduction information, that an MPE problem occurs on the terminal device. Therefore, the network device can learn, based on the beam measurement results of the plurality of uplink reference signals, whether the MPE problem occurs on the terminal device, to not only ensure that the radiant intensity of the terminal device meets the security standard, but also reduce signaling overheads for the terminal device to send separate signaling to notify the MPE problem.

With reference to the first aspect, in some implementations of the first aspect, the determining power reduction information of at least one of the plurality of uplink reference signals based on measurement results of the plurality of uplink reference signals includes: determining beam quality of a plurality of transmit beams corresponding to the plurality of uplink reference signals based on the plurality of uplink reference signals; determining the power reduction information of the at least one of the plurality of uplink reference signals based on the determined beam quality of the plurality of transmit beams and stored beam quality of the plurality of transmit beams.

The stored beam quality of the plurality of transmit beams is beam quality of the plurality of transmit beams stored during historical communication, for example, beam quality of the plurality of transmit beams during previous communication.

In a possible implementation, the power reduction information of the at least one of the plurality of uplink reference signals may be determined depending on whether a relationship between the beam quality of the plurality of transmit beams changes.

Based on the foregoing technical solution, the network device can compare the beam quality of the plurality of transmit beams, to determine the power reduction information, thereby reducing signaling overheads caused by separately notifying the power reduction information.

With reference to the first aspect, in some implementations of the first aspect, the stored beam quality of each transmit beam is determined based on a corresponding downlink reference signal.

With reference to the first aspect, in some implementations of the first aspect, the method further includes: determining a transmit beam of uplink data based on the determined beam quality of the plurality of transmit beams.

Based on the foregoing technical solution, the network device can further determine, based on the determined beam quality of the plurality of transmit beams, a transmit beam (for example, a beam and/or an antenna panel) for transmitting the uplink data for the terminal device, so that the transmit beam used by the terminal device for transmission can be dynamically adjusted, thereby ensuring system communication performance.

With reference to the first aspect, in some implementations of the first aspect, the transmit beam of the uplink data is any one of the following: a transmit beam with best beam quality in the plurality of transmit beams; or a transmit beam with power reduction in the plurality of transmit beams; or a transmit beam without power reduction in the plurality of transmit beams.

For example, the transmit beam of the uplink data is the transmit beam with the best beam quality in the plurality of transmit beams. In this example, the beam quality is quality of a transmit beam after power reduction is considered. For example, it is assumed that the plurality of transmit beams include a transmit beam with power reduction and a transmit beam without power reduction. When the transmit beam of the uplink data is the transmit beam with the best beam quality in the plurality of transmit beams, the transmit beam with the best beam quality represents a transmit beam with best beam quality in the transmit beam with power reduction and the transmit beam without power reduction.

With reference to the first aspect, in some implementations of the first aspect, the uplink reference signal is one of the following: a sounding reference signal, a demodulation reference signal, a phase tracking reference signal, or a random access preamble.

With reference to the first aspect, in some implementations of the first aspect, the uplink reference signal is a signal used for any one of the following: a signal used in a random access process, a reference signal used for channel measurement, a reference signal used for beam management, a signal used for codebook-based transmission, a signal used for non-codebook-based transmission, a reference signal used for an antenna switching function, a reference signal used for a carrier switching function, a reference signal used for uplink and downlink channels reciprocity detection, or a signal specially used to notify a radiant intensity.

According to a second aspect, a beam measurement method is provided. The method may be performed by a terminal device, or may be performed by a chip, a chip system, or a circuit configured in a terminal device. This is not limited in this application.

The method may include: determining a transmit beam of each of a plurality of uplink reference signals; and transmitting the plurality of uplink reference signals by using transmit beams of the plurality of uplink reference signals, where power reduction is performed on a transmit beam corresponding to at least one of the plurality of uplink reference signals.

For example, that each uplink reference signal corresponds to one transmit beam may be understood as that one uplink reference signal is sent by using one beam and/or one antenna panel.

Optionally, the transmit beam may be a beam, or may be an antenna panel; or the transmit beam may include a beam and an antenna panel; or the transmit beam may include an antenna (for example, in a low-frequency communication scenario).

Based on the foregoing technical solution, in some scenarios, if a radiant intensity of a terminal device exceeds or is about to exceed a regulation, the terminal device may transmit data and/or a signal, or the like by using a transmit beam after power reduction, to ensure that the radiant intensity of the terminal device meets a security standard. The terminal device sends a plurality of uplink reference signals by using transmit beams after power reduction, or the terminal device sends a plurality of uplink reference signals by using transmit beams after power reduction and transmit beams without power reduction. In addition, the terminal device can select some or all transmit beams from the plurality of transmit beams for sending the plurality of uplink reference signals, to send uplink data, to not only ensure that the radiant intensity of the terminal device meets the security standard, but also ensure data transmission performance.

With reference to the second aspect, in some implementations of the second aspect, the determining a transmit beam of each of a plurality of uplink reference signals includes: determining the transmit beam of each of the plurality of uplink reference signals when a preset condition is met.

With reference to the second aspect, in some implementations of the second aspect, the preset condition is that a radiant intensity risk occurs.

Occurrence of the radiant intensity risk may also be recorded as occurrence of an MPE problem or occurrence of an MPE event, or may be recorded as alarm information, which indicates that a radiant intensity exceeds a regulation limit, or radiated power or energy of the terminal device does not meet an act, a decree, or a rule, or a radiant intensity is about to exceed a regulation limit. A specific name does not constitute a limitation on the protection scope of embodiments of this application.

For example, that power reduction is performed on a transmit beam may be understood as that because the radiant intensity of the terminal device exceeds or is about to exceed the regulation limit, the terminal device reduces transmitted power, that is, performs power reduction, so that the radiant intensity of the terminal device meets the regulation.

Based on the foregoing technical solution, after a radiant intensity risk occurs, the terminal device sends a plurality of uplink reference signals, where each uplink reference signal corresponds to one transmit beam, and power reduction is performed on a transmit beam corresponding to at least one of the plurality of uplink reference signals.

With reference to the second aspect, in some implementations of the second aspect, the method further includes: determining a transmit beam of uplink data from the transmit beams of the plurality of uplink reference signals.

Based on the foregoing technical solution, a transmit beam for the terminal device to send uplink data may be determined from the plurality of transmit beams for sending the plurality of uplink reference signals.

With reference to the second aspect, in some implementations of the second aspect, the transmit beam of the uplink data is any one of the following: a transmit beam with best beam quality in the transmit beams of the plurality of uplink reference signals; or a transmit beam with power reduction in the transmit beams of the plurality of uplink reference signals; or a transmit beam without power reduction in the transmit beams of the plurality of uplink reference signals.

Based on the foregoing technical solution, the terminal device can select, from the plurality of transmit beams for sending the plurality of uplink reference signals, a transmit beam with best quality for sending the uplink data, or can select a transmit beam with power reduction for sending the uplink data, or can select a transmit beam without power reduction for sending the uplink data, or can select a transmit beam whose quality meets a specific threshold for sending the uplink data, thereby improving data transmission reliability. In addition, an appropriate transmit beam may be selected based on an actual communication status, to meet more communication requirements as much as possible.

With reference to the second aspect, in some implementations of the second aspect, the plurality of uplink reference signals are used for any one of the following: channel measurement, beam management, codebook-based transmission, non-codebook-based transmission, an antenna switching function, a carrier switching function, uplink and downlink channels reciprocity detection, and information specially used to indicate a radiant intensity.

Based on the foregoing technical solution, the plurality of uplink reference signals sent by the terminal device may be uplink reference signals specially used to report a radiant intensity, or a function of the uplink reference signal is to separately report MPE-related information (or radiant intensity -related information). In this manner, a dynamic scenario can be more matched. For example, after a radiant intensity exceeds or is about to exceed a regulation limit, an uplink reference signal for notifying radiant intensity -related information is reported. Alternatively, the uplink reference signal may be an uplink reference signal in an existing procedure, that is, the uplink reference signal (for example, an SRS in beam management) in the existing procedure is transmitted by using a transmit beam after power reduction. Therefore, not only beam management can be achieved, but also radiant intensity-related information can be implicitly indicated to the network device by using the transmit beam for transmitting the uplink reference signal. For example, that an MPE problem occurs on the terminal device is implicitly indicated through occurrence of power reduction on the transmit beam for transmitting the uplink reference signal.

According to a third aspect, a beam measurement method is provided. The method may be performed by a terminal device, or may be performed by a chip, a chip system, or a circuit configured in a terminal device. This is not limited in this application.

The method may include: The terminal device sends an uplink reference signal to a network device, where the uplink reference signal indicates information about a radiant intensity of the terminal device.

Optionally, the information about the radiant intensity may include power reduction information.

Optionally, the uplink reference signal is one of the following: a sounding reference signal, a demodulation reference signal, a phase tracking reference signal, or a random access preamble.

For example, the terminal device can periodically report information about a radiant intensity to the network device. In other words, the terminal device can periodically send an uplink reference signal for reporting the information about the radiant intensity to the network device, to notify the network device of radiant intensity-related information. Alternatively, for another example, when the terminal device determines that a radiant intensity exceeds a regulation constraint, that is, when the terminal device communicates with the network device by using a transmit beam, the radiant intensity exceeds the regulation constraint, and the terminal device sends an uplink reference signal for reporting information about the radiant intensity to the network device, to notify the network device that the radiant intensity exceeds the regulation constraint. Alternatively, for still another example, when the terminal device determines that a radiant intensity is about to exceed a regulation constraint, that is, when the terminal device communicates with the network device by using a transmit beam, the radiant intensity is about to exceed the regulation constraint, and the terminal device sends an uplink reference signal for reporting information about the radiant intensity to the network device, to notify the network device that the radiant intensity is about to exceed the regulation constraint.

Based on the foregoing technical solution, the terminal device notifies the network device of current or future radiant intensity-related information. In this way, the network device can learn of a status of the radiant intensity of the terminal device, and therefore can perform proper configuration and scheduling or can transmit a signal or a channel (that is, receive and send a signal or a channel) based on the radiant intensity-related information. For example, the terminal device can send a signal or data based on a scheduled or estimated transmit beam, and correspondingly, the network device receives the signal or the data by using a corresponding transmit beam. In addition, the terminal device sends an uplink reference signal to the network device, to notify the network device of radiant intensity-related information. A requirement for signal transmission is not high. Therefore, through signal transmission, a possibility of a transmission failure because the radiant intensity exceeds the regulation constraint can be reduced, transmission reliability can be improved, and signaling overheads can be further reduced.

With reference to the third aspect, in some implementations of the third aspect, that the uplink reference signal indicates information about a radiant intensity of the terminal device includes that: parameter information of the uplink reference signal indicates the information about the radiant intensity of the terminal device, where the parameter information of the uplink reference signal includes the information about the radiant intensity; or a transmit beam for sending the uplink reference signal indicates the information about the radiant intensity of the terminal device.

In a possible implementation, the terminal device sends the uplink reference signal, and the parameter information of the uplink reference signal carries the information about the radiant intensity of the terminal device. The terminal device implicitly indicates, by using the sent parameter information of the uplink reference signal, that an MPE problem occurs on the terminal device.

In another possible implementation, when sending the uplink reference signal, the terminal device sends the uplink reference signal by using a transmit beam after power reduction. That an MPE problem occurs on the terminal device is implicitly indicated by sending the uplink reference signal by using the transmit beam after power reduction.

Based on the foregoing technical solution, the terminal device may indicate the information about the radiant intensity by using the parameter information of the uplink reference signal; or the terminal device may indicate the information about the radiant intensity by using the transmit beam for sending the uplink reference signal.

With reference to the third aspect, in some implementations of the third aspect, the uplink reference signal is a sounding reference signal SRS, and that the parameter information of the uplink reference signal indicates the information about the radiant intensity of the terminal device includes that a time-frequency offset and/or a phase offset of the SRS indicates the information about the radiant intensity of the terminal device.

Based on the foregoing technical solution, the information about the radiant intensity may be carried in related parameter information of the SRS.

With reference to the third aspect, in some implementations of the third aspect, the uplink reference signal is a random access preamble preamble, and that the parameter information of the uplink reference signal indicates the information about the radiant intensity of the terminal device includes that: one or more pieces of the following information about the preamble indicate the information about the radiant intensity of the terminal device: an access occasion, a preamble sequence offset, and a preamble sequence number.

With reference to the third aspect, in some implementations of the third aspect, the information about the radiant intensity of the terminal device includes one or more of the following: a transmit beam for the terminal device to send data; a maximum permissible exposure MPE problem occurring on the terminal device; a power reduction identifier of the terminal device; a power reduction value of the terminal device; power headroom or energy headroom of the terminal device; an identifier of an uplink transmission duty cycle that needs to be reduced by the terminal device; a value of the uplink transmission duty cycle that needs to be reduced by the terminal device; and quality of a transmit beam of the terminal device after power reduction.

With reference to the third aspect, in some implementations of the third aspect, the uplink reference signal is a signal used for any one of the following: a signal used in a random access process, a reference signal used for channel measurement, a reference signal used for beam management, a signal used for codebook-based transmission, a signal used for non-codebook-based transmission, a reference signal used for an antenna switching function, a reference signal used for a carrier switching function, a reference signal used for uplink and downlink channels reciprocity detection, or a signal specially used to notify a radiant intensity.

Based on the foregoing technical solution, the uplink reference signal may be a signal specially used to report a radiant intensity, or a function of the uplink reference signal is to separately report MPE-related information (or radiant intensity-related information). In this manner, a dynamic scenario can be more matched. For example, after a radiant intensity exceeds or is about to a regulation limit (for example, after an MPE problem occurs), an uplink reference signal for notifying radiant intensity-related information is reported. Alternatively, a signal in an existing procedure may be reused. In this manner, the signal in the existing procedure can be reused, thereby further reducing the signaling overheads.

With reference to the third aspect, in some implementations of the third aspect, that the terminal device sends an uplink reference signal to a network device includes that: The terminal device sends the uplink reference signals to the network device by using a plurality of transmit beams.

Based on the foregoing technical solution, the terminal device can send the uplink reference signals by using a plurality of transmit beams.

With reference to the third aspect, in some implementations of the third aspect, the plurality of transmit beams belong to one or more of the following: a transmit beam of the terminal device after power reduction; a transmit beam of the terminal device after power reduction, and the terminal device applies different power reductions on different transmit beams; a transmit beam indicated by the network device; and a default transmit beam of the terminal device.

Optionally, the default transmit beam may represent a transmit beam of the terminal device obtained after power reduction; or the default transmit beam may represent a transmit beam of the terminal device without power reduction; or the default transmit beam may represent a transmit beam with best quality in activated beams of the terminal device; or the default transmit beam may represent a transmit beam whose quality meets a specific condition (for example, reaches a threshold).

For example, the terminal device notifies information about a radiant intensity by using the transmit beam after power reduction. In this example, in a possible implementation, the terminal device sends an uplink reference signal by using the transmit beam after power reduction, where parameter information of the uplink reference signal carries the information about the radiant intensity.

For another example, the terminal device sends an uplink reference signal by using the transmit beam after power reduction, where the terminal device applies different power reductions on different transmit beams. In this example, the terminal device may implicitly indicate to the network device that the radiant intensity of the terminal device exceeds or is about to exceed the regulation constraint.

For still another example, the terminal device notifies information about a radiant intensity by using the transmit beam indicated by the network device, or the terminal device notifies information about a radiant intensity by using the default transmit beam. In this example, in a possible implementation, the terminal device sends an uplink reference signal by using the transmit beam indicated by the network device or the default transmit beam, where another parameter information of the uplink reference signal may include, but is not limited to, parameters such as a time-frequency offset and a phase offset, and may carry the information about the radiant intensity.

Based on the foregoing technical solution, the terminal device may send the uplink reference signal by using the transmit beam after power reduction; or the terminal device may send the uplink reference signal by using the transmit beam indicated by the network device; or the terminal device may send the uplink reference signal by using the default transmit beam.

With reference to the third aspect, in some implementations of the third aspect, the method further includes: The terminal device requests beam measurement from the network device; and the terminal device receives downlink control information from the network device, where the downlink control information is used to trigger the terminal device to perform beam measurement based on the uplink reference signal.

Based on the foregoing technical solution, the terminal device can apply to the network device for triggering uplink reference signal beam measurement, and then the network device can perform corresponding configuration and scheduling for the terminal device.

With reference to the third aspect, in some implementations of the third aspect, the method further includes: The terminal device sends data or a signal by using a beam and/or a panel that are/is determined based on any one of the following: a protocol agreement, an indication by the network device, or a selection by the terminal device.

Based on the foregoing technical solution, a transmit beam used by the terminal device to send a signal or a channel (for example, data) to the network device may be determined by using the protocol agreement, or may be indicated by the network device, or may be selected by the terminal device.

With reference to the third aspect, in some implementations of the third aspect, the transmit beam used by the terminal device to send the data or the signal is one of the following: a transmit beam with best quality in activated transmit beams of the terminal device; a transmit beam of the terminal device after power reduction; a transmit beam of the terminal device without power reduction; and a transmit beam whose beam quality is greater than a first threshold.

According to a fourth aspect, a beam measurement method is provided. The method may be performed by a network device, or may be performed by a chip, a chip system, or a circuit configured in a network device. This is not limited in this application.

The method may include: A network device receives an uplink reference signal from a terminal device; and the network device determines information about a radiant intensity of the terminal device based on the uplink reference signal.

Optionally, the network device allocates, based on the information about the radiant intensity of the terminal device, a transmission resource for sending data to the terminal device.

Optionally, the uplink reference signal is one of the following: a sounding reference signal, a demodulation reference signal, a phase tracking reference signal, or a random access preamble.

With reference to the fourth aspect, in some implementations of the fourth aspect, that the network device determines information about a radiant intensity of the terminal device based on the uplink reference signal includes: The network device determines the information about the radiant intensity of the terminal device based on parameter information of the uplink reference signal; or the network device determines the information about the radiant intensity of the terminal device based on a transmit beam for sending the uplink reference signal.

With reference to the fourth aspect, in some implementations of the fourth aspect, the uplink reference signal is a sounding reference signal SRS, and that the network device determines the information about the radiant intensity of the terminal device based on parameter information of the uplink reference signal includes: The network device determines the information about the radiant intensity of the terminal device based on a time-frequency offset and/or a phase offset of the SRS.

With reference to the fourth aspect, in some implementations of the fourth aspect, the uplink reference signal is a random access preamble preamble, and that the network device determines the information about the radiant intensity of the terminal device based on parameter information of the uplink reference signal includes: The network device determines the information about the radiant intensity of the terminal device based on one or more of the following: an access occasion, a preamble sequence offset, and a preamble sequence number.

With reference to the fourth aspect, in some implementations of the fourth aspect, that the network device determines the information about the radiant intensity of the terminal device based on a transmit beam for sending the uplink reference signal includes: The network device determines that an MPE problem occurs on the terminal device when the network device determines that the terminal device sends the uplink reference signal by using a transmit beam after power reduction.

With reference to the fourth aspect, in some implementations of the fourth aspect, the information about the radiant intensity of the terminal device includes one or more of the following: a transmit beam for the terminal device to send data; a maximum permissible exposure MPE problem occurring on the terminal device; a power reduction identifier of the terminal device; a power reduction value of the terminal device; power headroom or energy headroom of the terminal device; an identifier of an uplink transmission duty cycle that needs to be reduced by the terminal device; a value of the uplink transmission duty cycle that needs to be reduced by the terminal device; and quality of a transmit beam of the terminal device after power reduction.

With reference to the fourth aspect, in some implementations of the fourth aspect, that a network device receives an uplink reference signal from a terminal device includes: The network device receives the uplink reference signals from the terminal device by using receive beams corresponding to a plurality of transmit beams.

With reference to the fourth aspect, in some implementations of the fourth aspect, the receive beams corresponding to the plurality of transmit beams belong to one of the following: beams corresponding to transmit beams of the terminal device after power reduction; beams corresponding to transmit beams indicated by the network device; and a default receive beam of the network device.

With reference to the fourth aspect, in some implementations of the fourth aspect, the uplink reference signal is a signal used for any one of the following: a signal used in a random access process, a reference signal used for channel measurement, a reference signal used for beam management, a signal used for codebook-based transmission, a signal used for non-codebook-based transmission, a reference signal used for an antenna switching function, a reference signal used for a carrier switching function, a reference signal used for uplink and downlink channels reciprocity detection, or a signal specially used to notify a radiant intensity.

With reference to the fourth aspect, in some implementations of the fourth aspect, the transmission resource that is allocated by the network device to the terminal device and that is used to send the data includes a transmit beam used to send the data.

According to a fifth aspect, a radiant intensity management method is provided. The method may be performed by a terminal device, or may be performed by a chip, a chip system, or a circuit configured in a terminal device. This is not limited in this application.

The method may include: The terminal device obtains radiant intensity management information, where the radiant intensity management information is used to determine whether a maximum permissible exposure MPE problem occurs on N beams and/or M antenna panels, and M and N are integers greater than 1 or equal to 1; and when the terminal device communicates with a network device by using a first beam and/or a first antenna panel, the terminal device determines, based on the radiant intensity management information, whether the MPE problem occurs on the first beam and/or the first antenna panel, where the N beams include the first beam, and the M antenna panels include the first antenna panel.

For example, that the terminal device obtains the radiant intensity management information may indicate that the terminal device reads or determines the radiant intensity management information. It may be understood that the terminal device maintains the radiant intensity management information, and the terminal device reads the radiant intensity management information when necessary.

For example, the N beams represent N activated beams of the terminal device, and the M antenna panels represent M activated antenna panels of the terminal device.

Based on the foregoing technical solution, the terminal device can determine, based on radiant intensity management information of a transmit beam, whether an MPE problem occurs on the transmit beam. Therefore, a radiant intensity of the transmit beam can be monitored based on the radiant intensity management information of the transmit beam, thereby improving system reliability.

With reference to the fifth aspect, in some implementations of the fifth aspect, the radiant intensity management information includes a set of management information, and the N beams and/or the M antenna panels all correspond to the set of management information.

Based on the foregoing technical solution, a simplified management mechanism for a radiant intensity is provided. To be specific, the terminal device maintains one set of management information for all activated beams or all activated antenna panels, that is, a beam-based or an antenna panel-based monitoring management mechanism. Therefore, management of the terminal device is simplified, and system reliability is enhanced and system efficiency is improved under a condition that an MPE constraint is met. In addition, in some solutions, antenna panel-based or beam-based monitoring and management may be implemented without using a sensor, thereby reducing hardware complexity and costs.

With reference to the fifth aspect, in some implementations of the fifth aspect, the radiant intensity management information includes a plurality of sets of management information, and all the N beams and/or the M antenna panels are in a one-to-one correspondence with the plurality sets of management information.

For example, each beam corresponds to one set of management information. Alternatively, for example, each antenna panel corresponds to one set of management information.

Based on the foregoing technical solution, a more detailed management mechanism for a radiant intensity is provided. To be specific, the terminal device maintains a set of management information for each activated beam or each activated antenna panel, that is, a beam-based or an antenna panel-based monitoring management mechanism. Therefore, the system reliability is enhanced and the system efficiency is improved under a condition that the MPE constraint is met. In addition, in some solutions, antenna panel-based or beam-based monitoring and management may be implemented without using a sensor, thereby reducing hardware complexity and costs.

With reference to the fifth aspect, in some implementations of the fifth aspect, the radiant intensity management information includes one or more of the following: a start position of a time window, a window length of the time window, a sliding distance of the time window, a quantity of sampling points in the time window, a radiant intensity threshold or derived value, a transmitted power threshold, a transmitted power reduction range, an energy threshold, and an energy reduction range, where the time window represents a time window for monitoring whether an MPE problem occurs on a transmit beam.

With reference to the fifth aspect, in some implementations of the fifth aspect, when detecting that a human body approaches the first beam and/or the first antenna panel, the terminal device determines, based on the radiant intensity management information, whether the MPE problem occurs on the first beam and/or the first antenna panel.

With reference to the fifth aspect, in some implementations of the fifth aspect, the method further includes: after the terminal device determines that the MPE problem occurs on the first beam and/or the first antenna panel, the terminal device performs one or more of the following processing: The terminal device chooses to send data by using a second beam set and/or a second antenna panel set; and the terminal device reduces transmitted power when sending data by using the first beam and/or the first antenna panel.

According to a sixth aspect, a beam measurement method is provided. The method may be performed by a terminal device, or may be performed by a chip, a chip system, or a circuit configured in a terminal device. This is not limited in this application.

The method may include: The terminal device communicates with a network device by using a first beam and/or a first antenna panel; and when a maximum permissible exposure MPE problem occurs or is about to occur, the terminal device sends uplink signaling to the network device, where the uplink signaling is used to notify deactivation of the first antenna panel.

For example, the signaling may also be referred to as deactivation signaling or antenna panel deactivation signaling.

Based on the foregoing technical solution, the terminal device can send uplink signaling (for example, deactivation signaling) to the network device, to implicitly notify the network device that a radiant intensity of the terminal device may exceed or may be about to exceed a regulation constraint.

According to a seventh aspect, a beam measurement method is provided. The method may be performed by a network device, or may be performed by a chip, a chip system, or a circuit configured in a network device. This is not limited in this application.

The method may include: The network device receives uplink signaling from a terminal device, where the uplink signaling is used to notify deactivation of a first antenna panel; and the network device determines, based on the uplink signaling, that a maximum permissible exposure MPE problem occurs or is about to occur when the terminal device performs communication by using the first antenna panel.

According to an eighth aspect, a communication apparatus is provided. The communication apparatus is configured to perform the method according to the second aspect, the third aspect, the fifth aspect, and the sixth aspect. Specifically, the communication apparatus may include modules configured to perform the method according to the second aspect, the third aspect, the fifth aspect, and the sixth aspect.

According to a ninth aspect, a communication apparatus is provided. The communication apparatus is configured to perform the method according to the first aspect, the fourth aspect, and the seventh aspect. Specifically, the communication apparatus may include modules configured to perform the method according to the first aspect, the fourth aspect, and the seventh aspect.

According to a tenth aspect, a communication apparatus is provided, including a processor. The process is coupled to a memory and may be configured to execute instructions in the memory, to implement the method according to the second aspect, the third aspect, the fifth aspect, and the sixth aspect and any one of the possible implementations in the second aspect, the third aspect, the fifth aspect, and the sixth aspect. Optionally, the communication apparatus further includes the memory. Optionally, the communication apparatus further includes a communication interface, the processor is coupled to the communication interface, and the communication interface is configured to input and/or output information. The information includes at least one of instructions or data.

In an implementation, the communication apparatus is a terminal device. When the communication apparatus is the terminal device, the communication interface may be a transceiver or an input/output interface.

In another implementation, the communication apparatus is a chip or a chip system. When the communication apparatus is the chip or the chip system, the communication interface may be an input/output interface, or may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system configured in the terminal device.

Optionally, the transceiver may be a transceiver circuit. Optionally, the input/output interface may be an input/output circuit.

According to an eleventh aspect, a communication apparatus is provided, including a processor. The process is coupled to a memory and may be configured to execute instructions in the memory, to implement the method according to the first aspect, the fourth aspect, and the seventh aspect and any one of the possible implementations in the first aspect, the fourth aspect, and the seventh aspect. Optionally, the communication apparatus further includes the memory. Optionally, the communication apparatus further includes a communication interface, the processor is coupled to the communication interface, and the communication interface is configured to input and/or output information. The information includes at least one of instructions or data.

In an implementation, the communication apparatus is a network device. When the communication apparatus is the network device, the communication interface may be a transceiver or an input/output interface.

In another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

In another implementation, the communication apparatus is a chip or a chip system configured in the network device.

Optionally, the transceiver may be a transceiver circuit. Optionally, the input/output interface may be an input/output circuit.

According to a twelfth aspect, a computer-readable storage medium is provided, storing a computer program, where when the computer program is executed by a communication apparatus, the communication apparatus is enabled to implement the method according to the second aspect, the third aspect, the fifth aspect, and the sixth aspect and any one of the possible implementations in the second aspect, the third aspect, the fifth aspect, and the sixth aspect.

According to a thirteenth aspect, a computer-readable storage medium is provided, storing a computer program, where when the computer program is executed by a communication apparatus, the communication apparatus is enabled to implement the method according to the first aspect, the fourth aspect, and the seventh aspect and any one of the possible implementations in the first aspect, the fourth aspect, and the seventh aspect.

According to a fourteenth aspect, a computer program product including instructions is provided. When the instructions are executed by a computer, a communication apparatus is enabled to implement the method according to the second aspect, the third aspect, the fifth aspect, and the sixth aspect.

According to a fifteenth aspect, a computer program product including instructions is provided. When the instructions are executed by a computer, a communication apparatus is enabled to implement the method according to the first aspect, the fourth aspect, and the seventh aspect.

According to a sixteenth aspect, a communication system is provided, including the foregoing network device and terminal device.

### BRIEF DESCRIPTION OF DRAWINGS

FIG. 1 is a schematic diagram of a communication system applicable to an embodiment of this application.
FIG. 2 is a schematic diagram of a beam measurement method according to an embodiment of this application;
FIG. 3 is a schematic flowchart of a beam measurement method applicable to an embodiment of this application.
FIG. 4 is a schematic diagram of an SRS used for beam management applicable to an embodiment of this application.
FIG. 5 is another schematic diagram of an SRS used for beam management applicable to an embodiment of this application.
FIG. 6 is a schematic diagram of an SRS used for CB-based or NCB-based transmission applicable to an embodiment of this application.
FIG. 7 is a schematic diagram of radiant intensity management applicable to an embodiment of this application.
FIG. 8 is another schematic diagram of radiant intensity management applicable to an embodiment of this application.
FIG. 9 is a schematic diagram of radiant intensity management applicable to another embodiment of this application.
FIG. 10 is still another schematic diagram of radiant intensity management applicable to still another embodiment of this application.
FIG. 11 is a schematic block diagram of a communication apparatus according to an embodiment of this application.
FIG. 12 is another schematic block diagram of a communication apparatus according to an embodiment of this application.
FIG. 13 is a schematic block diagram of a terminal device according to an embodiment of this application, and
FIG. 14 is a schematic block diagram of a network device according to an embodiment of this application.

### DESCRIPTION OF EMBODIMENTS

The following describes technical solutions of this application with reference to the accompanying drawings.

The technical solutions in embodiments of this application are applicable to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and a universal mobile telecommunication system (universal mobile telecommunication system, UMTS). The technical solutions in embodiments of this application may be further applied to device-to-device (device to device, D2D) communication, machine-to-machine (machine to machine, M2M) communication, machine type communication (machine type communication, MTC), and communication in an internet-of-vehicles system.

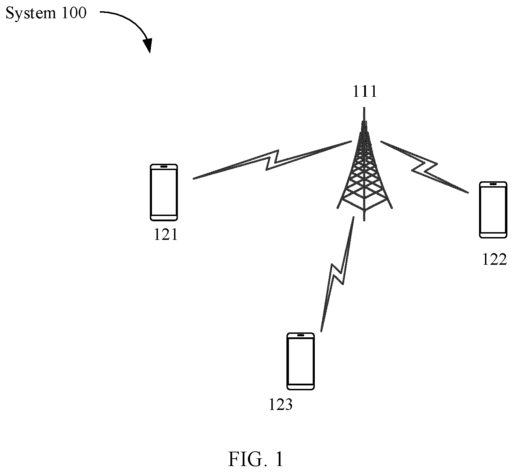

For ease of understanding of embodiments of this application, a communication system applicable to embodiments of this application is first described in detail with reference to FIG. 1.

FIG. 1 is a schematic diagram of a wireless communication system 100 applicable to an embodiment of this application. As shown in FIG. 1, the wireless communication system 100 may include at least one network device, for example, a network device 111 shown in FIG. 1. The wireless communication system 100 may further include at least one terminal device, for example, a terminal device 121 to a terminal device 123 shown in FIG. 1. A plurality of antennas may be configured for both the network device and the terminal device. The network device and the terminal device may communicate with each other by using a multi-antenna technology. The network device may be used as a transmit end, and the terminal device may be used as a receive end; or the network device may be used as a receive end, and the terminal device may be used as a transmit end.

It may be understood that transmission between the network device and the terminal device may be performed by using radio waves, or may be performed by using a transmission medium such as visible light, laser, infrared, or an optical fiber.

It should be understood that, FIG. 1 is merely an example, and this application is not limited thereto. For example, embodiments of this application may be further applied to any communication scenario including a transmit end and a receive end.

It should be understood that the network device in the wireless communication system may be any device that has a wireless transceiver function. The device includes, but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home NodeB (for example, Home eNodeB or Home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), a transmission and reception point (transmission and reception point, TRP), or the like, or may be a gNB or a transmission point (TRP or TP) in a 5G system, for example, an NR system, or one antenna panel or a group (which includes a plurality of antenna panels) of antenna panels in a 5G system, or may be a network node such as a baseband unit (BBU) or a distributed unit (distributed unit, DU) forming a gNB or a transmission point.

In some deployments, the gNB may include a central unit (central unit, CU) and the DU. The gNB may further include an active antenna unit (active antenna unit, AAU for short). The CU implements some functions of the gNB, and the DU implements some functions of the gNB. For example, the CU is responsible for processing a non-real-time protocol and a service, to implement functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be a network device in an access network (radio access network, RAN), or may be a network device in a core network (core network, CN). This is not limited in this application.

It should be further understood that the terminal device in the wireless communication system may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Application scenarios are not limited in embodiments of this application.

For ease of understanding embodiments of this application, the following first briefly describes terms and background in this application.

When a terminal device is used, a transmit antenna is quite close to a brain or another part of a human body. To prevent emitting excessively high electromagnetic energy radiation, some standards are generally used for indication, so as to ensure safety when people use the terminal device. For example, maximum permissible exposure (maximum permissible exposure, MPE) (amount), maximum permissible value of radio frequency emission (maximum permissible RF exposure regulations), a specific absorption rate (specific absorption rate, SAR), radio frequency radiation (or RF emission), or the like may indicate that a constraint on a human body radiation requirement is met. For ease of understanding, the MPE is mainly used as an example below for description.

Generally, an MPE constraint index is an amount of radiation in average area within an average time at a specific distance. For detailed constraint requirements, refer to constraint requirements provided by the international commission on non-ionizing radiation protection (international commission on non-ionizing radiation protection, ICNIRP) and the federal communication commission (federal communication commission, FCC). As an example for description, Table 1 and Table 2 show two possible constraint manners.

**Table 1**

| | FCC | ICNIRP |
|---|---|---|
| f_{ref} (GHz) | 6 | 6 |
| Power density (W/m²) | 10 | 55*f-0.177 |
| f>f_{ref} | | |
| Statistical area | 4 cm² | 4 cm² (~30 GHz) |
| | | 1 cm² (30 GHz~) |
| Statistical time | 8s (16 GHz to 24 GHz) | 6 mins (~300 GHz) |
| | 4s (24 GHz to 42 GHz) | |
| | 2s (42 GHz~) | |

**Table 2**

| | f (GHz) | array area (cm²) 2x2 to 10x10 elements | maximum transmitted power (dBm) | | maximum EIRP (dBm) | |
|---|---|---|---|---|---|---|
| | | | ICNIRP | FCC | ICNIRP | FCC |
| portable applications (d=0.5 cm) | 10 | 9.0-230 | 13-25 | 8-19 | 24-50 | 19-44 |
| | 20 | 2.3-56 | 11-19 | 6-14 | 23-44 | 18-39 |
| | 30 | 1.0-25 | 11-16 | 6-11 | 22-41 | 17-36 |
| | 40 | 0.56-14 | 6-12 | 6-10 | 17-37 | 17-35 |
| | 50 | 0.36-9.0 | 5-11 | 6-9 | 17- 36 | 17-34 |

Table 1 shows a simple constraint manner, that is, factors such as a frequency (f_{ref}), power density (power density, PD), a statistical area, and statistical time are considered. In practice, factors such as a distance to a human body and an antenna array are usually further considered in the MPE constraint, as shown in Table 2.

As shown in Table 2, a frequency f=10 GHz is used as an example. When a 2x2 antenna array is deployed and an array area (array area) is 9 cm², and when a distance d between a terminal device (for example, a portable application (portable applications)) and a human body=0.5 cm is met, an ICNIRP constraint is met, a maximum transmitted power (maximum transmitted power) is 13 dBm, and a maximum equivalent isotropically radiated power (equivalent isotropically radiated power, EIRP) (or an equivalent isotropically radiated power) (maximum EIRP) is 24 dBm. In this example, time average is not considered, and it may be considered that the terminal device continuously performs sending.

The MPE constraint considers an amount of radiation over an average time, so that the amount of radiation can be increased when the radiation is not continuous. Table 2 is used as an example. Both the provided transmitted power and EIRP are indicators under continuous sending, that is, indicators when an uplink transmission duty cycle (duty cycle, or duty ratio) is 100%. If the uplink transmission duty cycle is reduced within a period of time, corresponding transmitted power or EIRP may be increased. For example, if the uplink transmission duty cycle is reduced to 25% within a period of time (for example, in a typical TDD configuration DDDSU), corresponding transmitted power or EIRP may be increased by 6 dB.

It can be learned from the foregoing analysis that a plurality of factors are considered in the MPE constraint, for example, the distance to a human body, the transmitted power, the EIRP, and the uplink transmission duty cycle (or a sending time ratio). These factors can be completely determined by implementation of the terminal device. For example, the distance to a human body can be obtained by using a sensor. For another example, the transmitted power or the EIRP can be implemented through power reduction. For another example, the uplink transmission duty cycle can be properly configured by the network device by reporting a capability to the network device. However, implementation by only the terminal device may bring some problems and risks to the system. For example, power reduction may cause uplink coverage to shrink, and may further cause a system radio link failure (radio link failure, RLF) risk. For another example, an excessively low uplink transmission duty cycle may cause an excessively low uplink throughput. In addition, the sensor for detecting the distance to a human body also faces problems of accuracy, precision, and the like.

Related information of the MPE constraint is briefly described above, and related content of performing communication by using a beam is described below.

In some communication systems such as 5G NR, a high frequency band (which is usually considered to be above 6 GHz) is newly added, for example, a 28 GHz, 39 GHz, or 60 GHz frequency band. A higher bandwidth and a higher transmission rate can be achieved by introducing the high frequency band. When the high frequency band is introduced, serious fading may occur during propagation of a signal in a space due to a high frequency. For example, a good directive gain can be obtained by using a beamforming (beamforming, BF) technology, to increase directional power in a transmit direction and increase a signal to interference plus noise ratio (signal to interference plus noise ratio, SINR) of a receive end, thereby improving system performance.

In a 5G NR research process, considering costs and performance, a hybrid beamforming (hybrid beamforming, HBF) technology including digital beamforming and analog beamforming may be used. In an implementation process of the beamforming technology, a core component includes an antenna panel (antenna panel), and a beam is sent or received by using the antenna panel. During5G NR deployment implementation, because directional beams are used, to meet wide-area coverage, both a network device and a terminal device adopt multi-antenna panel deployment. Especially for the terminal device, to meet coverage, the antenna panel deployment has more important impact on performance in a case of limited space and cost reduction.

After both the network device and the terminal device use the hybrid beamforming technology, some discussions are brought about.

### 1. About management of receive and transmit beams.

After a plurality of discussions about management of receive and transmit beams, content of beam management is finally standardized in the first release of 3GPP Rel-15 of 5G NR. A framework of beam management is standardized, including beam training, beam measurement and reporting, beam indication of each signal or channel, and the like. The following separately briefly describes indications of uplink and downlink signal beams or channel beams.

For example, for an indication of a physical downlink control channel (physical downlink control channel, PDCCH) beam, a beam resource pool may be configured by using higher layer radio resource control (radio resource control, RRC) signaling, and one beam is activated by using medium access control-control element (medium access control-control element, MAC-CE) signaling to indicate the PDCCH beam. For another example, for an indication of a physical downlink shared channel (physical downlink shared channel, PDSCH) beam, a beam resource pool may be configured by using higher layer RRC signaling, a beam subset including a plurality of beams is activated by using MAC-CE signaling, and finally a beam in the beam subset is triggered by using downlink control information (downlink control information, DCI) to indicate the PDSCH beam. For another example, periodic and aperiodic channel state information reference signal (channel state information reference signal, CSI-RS) beams may be indicated by using RRC signaling. For another example, a semi-persistent CSI-RS beam may be indicated by using a MAC-CE. For another example, for an indication of a physical uplink control channel (physical uplink control channel, PUCCH) beam, a beam resource pool may be configured by using higher layer RRC signaling, and one beam is activated by using MAC-CE signaling to indicate the PUCCH beam. For another example, a physical uplink shared channel (physical uplink shared channel, PUSCH) beam may be indicated by using a sounding reference signal (sounding reference signal, SRS) beam indicated by an SRI associated with the physical uplink shared channel beam. For another example, a periodic SRS (periodic SRS, P-SRS) beam and an aperiodic SRS (aperiodic SRS, AP-SRS) beam may be indicated by using RRC signaling. For another example, a semi-persistent SRS (semi-persistent SRS, SP-SRS) may be indicated by using RRC signaling or may be indicated by using MAC-CE signaling.

It should be understood that the related content of management of the receive and transmit beams is merely a description for ease of understanding, and does not limit the protection scope of embodiments of this application.

It should be further understood that, in the following embodiments, a beam generally represents a transmit beam unless otherwise specified.

### 2. About an antenna panel.

In the foregoing signal or channel beam indication processes, switching of a beam (or a beam pair) is a core process, and involves not only beam switching of the network device, but also beam switching of the terminal device. In the release of 3GPP Rel-15, the antenna panel is not clearly defined, and the antenna panel of the network device or the antenna panel of the terminal device is transparent. The transparency may be understood as that a status of the antenna panel of the network device is invisible to the terminal device, and similarly, a status of the antenna panel of the terminal device is invisible to the network device, depending on respective implementations. Therefore, how a beam or a resource (a signal, a channel, or the like) is associated with the antenna panel also substantially depends on a device implementation. When the network device notifies the terminal device to switch a beam, because the antenna panel is transparent, the network device cannot determine whether the terminal device switches the antenna panel in a beam switching process. Switching of the antenna panel involves two actions: activation of the antenna panel and switching of the antenna panel. In addition, regardless of the terminal device or the network device, it takes a specific time to switch the antenna panel. RAN4 proposal has discussed and agreed that switching of the antenna panels typically requires around 2 ms to 3 ms (including activation of the antenna panel and switching of the antenna panel). Time for switching the antenna panel is not reserved in most scenarios of the current protocol. Therefore, if the antenna panel needs to be switched when beam switching occurs, it is ensured that sufficient time is reserved for the network device or the terminal device to switch the antenna panel by depending on a system main control node.

The antenna panel is referred to as a panel (panel) for short One or more receive beams and one or more transmit beams may be configured for each antenna panel. Therefore, the antenna panel may also be understood as a beam group. A communication device such as a terminal device or a network device may receive a signal by using a receive beam on the antenna panel, or may transmit a signal by using a transmit beam on the antenna panel.

The antenna panel is a logical entity. How a physical antenna is mapped to the logical entity is determined by a product implementation. An antenna panel identifier (identifier, ID) is defined. In this way, at least a transmit antenna panel of the terminal device is visible to the network device. Therefore, the network device may indicate or obtain a status of the antenna panel of the terminal device based on an ID of the antenna panel.

Alternatively, the antenna panel may be implicitly identified by using a signal or a signal set. For example, an attribute of the antenna panel may be represented by constraining some transmission attributes of the signal and the signal set. For example, in the Rel-15 protocol, a behavior of an SRS resource set (SRS resource set) is constrained "SRS resources belonging to a same SRS resource set cannot be simultaneously sent, and SRS resources belonging to different SRS resource sets can be simultaneously sent", to reflect that beams of a same antenna panel cannot be simultaneously sent, and beams of different antenna panels can be simultaneously sent.

For example, one antenna panel may correspond to one SRS resource set ID, that is, one SRS resource set ID may indicate one antenna panel. Alternatively, the ID of the antenna panel may be directly associated with a reference signal resource or a reference signal resource set. Alternatively, the ID of the antenna panel may be allocated to a target reference signal resource or a target reference signal resource set. Alternatively, the ID of the antenna panel may be additionally configured in spatial relation (spatial relation) information.

In addition, implementation of single antenna panel receiving or sending by the terminal device is simple, power consumption and heat dissipation are relatively low, and panel management is simple. However, a period of time (for example, 2 ms to 3 ms) needs to be reserved when panel activation and switching are performed, resulting in reduction of system efficiency. For simultaneous receiving and sending of the antenna panel, system robustness is enhanced, and system efficiency can be improved. However, implementation complexity of the terminal device is increased, and problems of large power consumption and heat dissipation are caused.

It should be understood that the related content of the antenna panel is merely a description for ease of understanding, and does not limit the protection scope of embodiments of this application. For example, in a future protocol, after the ID of the antenna panel is improved, it is still applicable to embodiments of this application.

### 3. MPE constraint of a terminal device.

Embodiments of this application mainly focus on an MPE constraint of the terminal device.

As described above, the FCC and the ICNIRP have constraints on radiation of the terminal device. For example, radiated power or energy per centimeter at a specific distance from a person should be less than a value.

In the release of 3GPP Rel-15, MPE is more related to an index constraint. Therefore, the MPE is more discussed in RAN4. In the Rel-15, the RAN4 provides two static solutions, power reduction and uplink transmission duty cycle reporting. The terminal device may separately consider, based on a specific implementation, power reduction or uplink transmission duty cycle reporting, or may combine the two manners. Some possible examples are as follows.

For example, in consideration of reporting 100% of an uplink transmission duty cycle, the terminal device backs off power to meet the MPE constraint. In this way, the terminal device meets the MPE constraint at any time. For another example, if the terminal device reports the uplink transmission duty cycle to meet the MPE constraint while considering the maximum transmitted power or the EIRP, the terminal device can meet the MPE constraint within the uplink transmission duty cycle without power reduction. For another example, when considering the maximum transmitted power or the EIRP, the terminal device increases the reported uplink transmission duty cycle, which does not meet the MPE constraint. In this case, the terminal device requires power reduction within the uplink transmission duty cycle, which may also meet the MPE constraint.

In addition, the RAN4 defines, in the Rel-15, that an MPE evaluation periodicity is 1s. In this case, the terminal device may evaluate an MPE status in any 1s periodicity. Specific evaluation depends on implementation.

Because the Rel-15 provides a static solution, the static solution cannot well adapt to a changing channel environment. Therefore, the RAN4 further proposes in Rel-16 that a dynamic solution is required to resolve the MPE problem. In the Rel-16, the scope of resolving the MPE problem is to resolve a radio link failure caused by the MPE. This mainly focuses on two aspects: reporting a current MPE status of the terminal device, and reporting a future MPE status (headroom and prediction) of the terminal device. An implementation includes: reporting an uplink transmission duty cycle, or reporting a power reduction value. In the solution of the RAN4 Rel-16, the terminal device mainly reports the MPE status of the terminal device to the network device, so that the network device can perform scheduling based on the MPE constraint. In addition, an MPE problem when uplink transmission is selected based on a multi-antenna panel (Multi-panel) is discussed in Rel-16 RAN1.

In Rel-17 RAN1 FeMIMO WID, an MPE problem is also proposed. A writing method is to verify and standardize an uplink coverage loss problem caused by considering the MPE constraint when uplink transmission is selected based on a multi-panel.

It can be learned from the foregoing that, in the existing solution, the MPE constraint of the terminal device mainly includes two solutions: the static solution and the dynamic solution.

### (1) Static solution.

Specifically, the Rel-15 defines a set of static solutions to resolve the MPE problem. The solution relates to two sub-solutions. The two sub-solutions may be implemented independently, or may be implemented jointly, depending on configuration of the network device and implementation of the terminal device.

Sub-solution 1: Define a capability of a static UE to limit a maximum uplink transmission duty cycle. A sending time of a terminal is controlled to meet the MPE index constraint, as shown in the following format:

```
          maxUplinkDutyCycle-FR2 ENUMERATED {n15, n20, n25, n30, n40, n50, n60, n70, n80, n90,
          n100} OPTIONAL
              ]]
```

Sub-solution 2: Define a power reduction mechanism as power management maximum power reduction (power management maximum power reduction, P-MPR). The MPE index constraint is met by controlling an uplink transmit power.

The foregoing two sub-solutions may separately resolve the MPE problem, and the two sub-solutions may be combined to meet the MPE index constraint.

For example, if maxUplinkDutyCycle-FR2 is reported in sub-solution 1, and an uplink transmission duty cycle of the terminal device in any 1s evaluation periodicity is greater than a capability reporting value, the terminal device performs power reduction based on uplink scheduling, that is, P-MPR. For another example, if maxUplinkDutyCycle-FR2 is not reported in sub-solution 1, the terminal device may directly meet the MPE constraint through power reduction.

### (2) Dynamic solution.

The Rel-16 proposes some MPE reporting solutions, as shown in the following example solutions.

For example, when an MPE problem occurs, the terminal device reports, after considering the MPE problem, a beam or a panel for sending data. For another example, when an MPE problem occurs, the terminal device carries and reports a beam-based or panel-based or terminal device-based power reduction value by using a PHR. For still another example, the terminal reports power headroom or energy headroom. For still another example, the terminal device may report MPE alarm signaling by using, for example, an RRC alert message or a 'P' bit of a MAC-CE. For still another example, the terminal device reports an uplink transmission duty cycle. The network device may calculate and determine a subsequent scheduling status based on the foregoing reporting by the terminal device.

In the foregoing static solution, although it can be ensured that the terminal device always determines that the MPE constraint is met, a usage range of the terminal device is limited, and a dynamic scenario cannot be met. Although the foregoing dynamic solution can meet the dynamic scenario, dynamic signaling is added, and reporting reliability after MPE occurs is poor.

In view of this, in embodiments of this application, an MPE management mechanism and reporting mechanism are designed by comprehensively considering implementation complexity, power consumption, and system performance of the terminal device. This can not only enhance an uplink coverage loss and a radio link failure caused by an MPE problem, and improve system efficiency, but also meet a dynamic scenario and improve reporting reliability by using a dynamic solution and a semi-static solution.

The following describes in detail embodiments provided in this application with reference to the accompanying drawings.

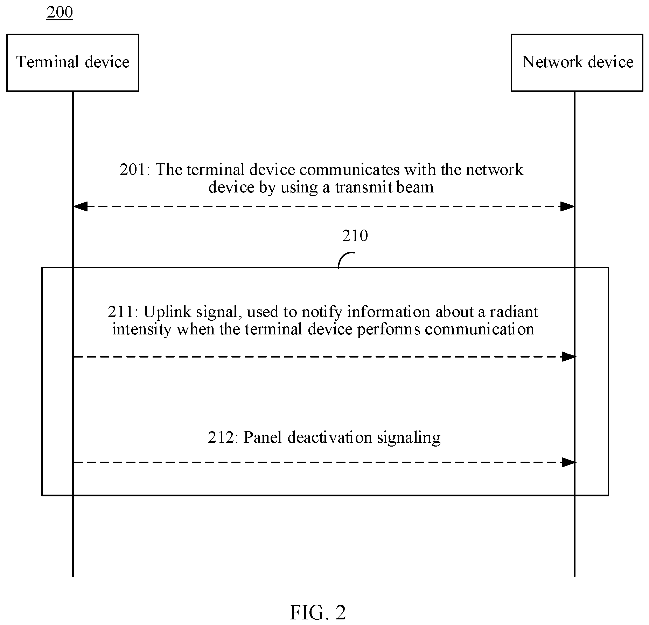

FIG. 2 is a schematic interaction diagram of a beam measurement method 200 according to an embodiment of this application. The method 200 may include the following steps.

The method 200 may include step 210. Step 210 may include step 211 or step 212.

211: A terminal device sends an uplink signal to a network device, where the uplink signal is used to notify information about a radiant intensity when the terminal device performs communication.

It may be understood that the terminal device notifies the network device of current or future radiant intensity-related information. In this way, the network device can perform proper configuration and scheduling or can transmit a signal or a channel (that is, receive and send a signal or a channel) based on the radiant intensity-related information. For example, the terminal device can send a signal or data based on a scheduled or estimated beam and/or panel. Correspondingly, the network device receives the signal or the data by using a corresponding beam and/or panel.

For example, the terminal device can periodically report information about a radiant intensity to the network device. In other words, the terminal device can periodically send an uplink signal for reporting the information about the radiant intensity to the network device, to notify the network device of radiant intensity-related information. Alternatively, for another example, when the terminal device determines that a radiant intensity exceeds a regulation constraint, the terminal device sends an uplink signal for reporting information about the radiant intensity to the network device, to notify the network device that the radiant intensity exceeds the regulation constraint. Alternatively, for still another example, when the terminal device determines that a radiant intensity is about to exceed a regulation constraint, the terminal device sends an uplink signal for reporting information about the radiant intensity to the network device, to notify the network device that the radiant intensity is about to exceed the regulation constraint.

A plurality of standards are used to represent the radiant intensity. In embodiments of this application, MPE is mainly used as an example for description, and all other standards that can represent the radiant intensity may be used in this solution in embodiments of this application.

In the following embodiments, occurrence of an MPE problem or experience of an MPE risk is mentioned for a plurality of times. A person skilled in the art should understand a meaning of the MPE problem or the MPE risk. The MPE problem or the MPE risk indicates that a radiant intensity exceeds a regulation limit, or radiated power or energy of the terminal device does not meet an act, a decree, or a rule.

In this embodiment of this application, considering that a signal transmission requirement is not high and transmission reliability after the radiant intensity exceeds the regulation constraint, the terminal device sends the uplink signal to the network device, to notify the network device of the radiant intensity-related information. Therefore, not only transmission reliability can be improved, but also signaling overheads can be reduced.

Related content of the uplink signal and related content of the information about the radiant intensity are described in detail below.

212: The terminal device sends panel deactivation signaling to the network device.

The terminal device can send the panel deactivation signaling to the network device, to implicitly indicate to the network device that an MPE problem occurs on the panel.

Optionally, the method 200 may further include step 201.

201: The terminal device communicates with the network device by using one or more transmit beams.

Optionally, the transmit beam may be a beam, or may be an antenna panel; or the transmit beam may include a beam and an antenna panel; or the transmit beam may include an antenna (for example, in a low-frequency communication scenario). The following mainly uses an example in which the transmit beam is a beam and/or a panel for description.

For ease of description below, one or more beams are referred to as a first beam for short, and one or more panels are referred to as a first panel for short.

It should be understood that, that the terminal device communicates with the network device by using the first beam and/or the first panel may indicate that the terminal device is communicating with the network device, or may indicate that the terminal device is to communicate with the network device by using the first beam and/or the first panel based on scheduling of the network device.

It is assumed that the first panel includes panel#1 and panel#2. The following uses an example in which the terminal device sends panel#1 deactivation signaling to the network device for description.

In a possible implementation, when the terminal device determines to use panel#1 for communication, and when a radiant intensity exceeds or is about to exceed a regulation constraint, the terminal device sends panel#1 deactivation signaling to the network device. After receiving the panel#1 deactivation signaling, the network device can determine that the radiant intensity of the terminal device exceeds or is about to exceed the regulation constraint.

In another possible implementation, the terminal device sends panel#1 deactivation signaling to the network device. After receiving the panel#1 deactivation signaling, the network device can determine that quality of panel#1 deteriorates, for example, the quality may deteriorate due to power reduction, or can determine that the radiant intensity of the terminal device may exceed or may be about to exceed the regulation constraint.

In this embodiment of this application, the terminal device can send the panel deactivation signaling to the network device, to implicitly notify the network device that the radiant intensity of the terminal device may exceed or may be about to exceed the regulation constraint.

The following describes content of embodiments of this application from several aspects. It should be understood that content of the following aspects may be used in combination, or may be used separately. This is not limited.

### Aspect 1: Form of an uplink signal.

In this embodiment of this application, the terminal device can send the uplink signal to the network device, to notify the network device of the radiant intensity-related information. A specific form of the uplink signal is not limited in this embodiment of this application.

Optionally, the uplink signal may be a sounding reference signal (sounding reference signal, SRS), a demodulation reference signal (demodulation reference signal, DMRS), an uplink phase tracking reference signal (phase tracking reference signal, PTRS), a preamble (preamble), or the like.

In a possible implementation, the uplink signal may be a signal specially used to report a radiant intensity, or a function of the uplink signal is to separately report MPE-related information (or radiant intensity-related information). In this manner, a dynamic scenario can be more matched. For example, after a radiant intensity exceeds a regulation limit (for example, after an MPE problem occurs), an uplink signal for notifying radiant intensity-related information is reported.

In another possible implementation, a signal in an existing procedure may also be reused. In this manner, the signal in the existing procedure can be reused, thereby further reducing the signaling overheads.

For example, the uplink signal may be a signal used in a random access process. For example, the uplink signal may be an uplink random access sequence, for example, a preamble.

For another example, the uplink signal may be a reference signal used for measurement. For example, the uplink signal may be an SRS used for uplink channel measurement. For another example, the uplink signal may be a reference signal used for uplink and downlink channels reciprocity detection.

For another example, the uplink signal may also be a signal used for other purposes such as beam management (beam management, BM), codebook (codebook, CB)-based transmission, non-codebook (non-codebook, NCB)-based transmission, a reference signal used for an antenna switching function, or a reference signal used for a carrier switching function. For example, the uplink signal is an SRS, and the SRS may be an SRS used for BM; or the SRS may be an SRS used for CB-based transmission; or the SRS may be an SRS used for NCB-based transmission.

It should be understood that the uplink signal listed above is merely an example, and should not constitute any limitation on this application. This application does not exclude a possibility of defining another uplink signal in a future protocol to implement a same or similar function. For example, the uplink signal may alternatively be a DMRS (for example, an uplink control channel demodulation reference signal or an uplink data channel demodulation reference signal). For another example, the uplink signal may alternatively be a PTRS.

The foregoing describes, with reference to aspect 1, the related content of the uplink signal used for reporting. The following describes, with reference to aspect 2, related content of a beam and/or a panel used for reporting.

### Aspect 2: Beam and/or panel used for reporting.

Optionally, the terminal device can transmit uplink signals by using one or more beams and/or one or more panels.

For example, the uplink signal is an SRS. Different SRS resources or resource sets may use different beams on a same panel; or different SRS resources or resource sets may use different beams on different panels; or different SRS resources or resource sets may use different panels.

There may be a plurality of implementations for the one or more beams and/or the one or more panels.

Implementation 1: The terminal device sends an uplink signal by using a first beam and/or a first panel.

For example, the terminal device can send an uplink signal by using a beam and/or a panel after power reduction. For another example, the terminal device sends an uplink signal by using a beam and/or a panel without power reduction.

The panel is used as an example. It is assumed that the first panel includes panel#1 and panel#2, that is, in step 201, the terminal device communicates with the network device by using panel#1 and panel#2.

In a possible case, when the terminal device determines that a radiant intensity exceeds or is about to exceed the regulation constraint, the terminal device sends an uplink signal by using panel#1 and panel#2 after power reduction. In other words, when the terminal device determines that the radiant intensity exceeds or is about to exceed the regulation constraint, the terminal device can reduce transmitted power, and the terminal device sends the uplink signal by using panel#1 and panel#2 after power reduction. The uplink signal may indicate information about the radiant intensity. For example, depending on that power reduction is performed on panel#1 and panel#2, it is determined that the radiant intensity may exceed or is about to exceed the regulation constraint.

In another possible case, when the terminal device determines that a radiant intensity exceeds or is about to exceed the regulation constraint, the terminal device sends an uplink signal by using panel#1 and panel#2 after power reduction, and reduced power of panel#1 and reduced power of panel#2 are different. In other words, when the terminal device determines that the radiant intensity exceeds or is about to exceed the regulation constraint, the terminal device can reduce transmitted power, and the terminal device sends the uplink signal by using panel#1 and panel#2 after power reduction. Backed-off power of panel#1 and reduced power of panel#2 are different, and the uplink signal may indicate information about the radiant intensity. For example, depending on that power reduction is performed on panel#1 and panel#2, and the reduced power of panel#1 and the reduced power of panel#2 are different, it is determined that the radiant intensity may exceed or is about to exceed the regulation constraint.

In still another possible case, when the terminal device determines that a radiant intensity exceeds or is about to exceed the regulation constraint, the terminal device sends an uplink signal by using panel#1 after power reduction and panel#2 without power reduction, or the terminal device sends an uplink signal by using panel#2 after power reduction and panel#1 without power reduction. In other words, when the terminal device determines that the radiant intensity exceeds or is about to exceed the regulation constraint, the terminal device can reduce transmitted power of some panels. For example, the terminal device can reduce transmitted power of panel#1, and the terminal device can send the uplink signal by using panel#1 after power reduction and panel#2 without power reduction. The uplink signal may indicate information about the radiant intensity. For another example, the terminal device can reduce transmitted power of panel#2, and the terminal device can send the uplink signal by using panel#2 after power reduction and panel#1 without power reduction. The uplink signal may indicate the information about the radiant intensity. For example, depending on that power reduction is performed on some of panel#1 and panel#2, and power reduction is not performed on some of panel#1 and panel#2, it is determined that a radiant intensity of a panel on which power reduction is performed may exceed or is about to exceed the regulation constraint.

In still another possible case, when the terminal device determines that a radiant intensity exceeds or is about to exceed the regulation constraint, the terminal device sends an uplink signal by using panel#1 after power reduction, or the terminal device sends an uplink signal by using panel#2 after power reduction. In other words, when the terminal device determines that the radiant intensity exceeds or is about to exceed the regulation constraint, the terminal device can determine, based on an actual communication status, which panels require power reduction, and the terminal device sends the uplink signal by using a panel after power reduction. For example, if the terminal device determines, based on an actual communication status, that panel#1 requires power reduction, the terminal device can send the uplink signal by using panel#1 after power reduction, and the uplink signal may indicate information about the radiant intensity. For example, depending on that power reduction is performed on panel#1 and panel#2, it is determined that a radiant intensity of panel#1 or panel#2 may exceed or is about to exceed the regulation constraint.

In still another possible case, when the terminal device determines that a radiant intensity exceeds or is about to exceed the regulation constraint, the terminal device sends an uplink signal by using panel#1 without power reduction, or the terminal device sends an uplink signal by using panel#2 without power reduction. In other words, when the terminal device determines that the radiant intensity exceeds or is about to exceed the regulation constraint, the terminal device can determine, based on an actual communication status, which panels require power reduction, and the terminal device sends the uplink signal by using a panel without power reduction. For example, if the terminal device determines, based on the actual communication status, that panel#1 requires power reduction, the terminal device can send the uplink signal by using panel#2 without power reduction, and the uplink signal may indicate information about the radiant intensity.

Optionally, the network device can determine a status of the radiant intensity of the terminal device based on a beam and/or a panel used by the terminal device to send the uplink signal. Specifically, the following provides description with reference to content of aspect 3.

Optionally, in implementation 1, for a purpose or a type of the uplink signal, refer to the descriptions in aspect 1.

Based on implementation 1, the terminal device can send the uplink signal by using a beam and/or a panel used in current communication. For example, the terminal device can send the uplink signal by using a beam and/or a panel after power reduction. For another example, the terminal device can send the uplink signal by using a beam and/or a panel after power reduction and a beam and/or a panel without power reduction. For another example, the terminal device can send the uplink signal by using a beam and/or a panel without power reduction.

Implementation 2: The network device indicates a beam and/or a panel for transmitting the uplink signal.

The panel is used as an example for description.

In a possible case, the network device indicates that some panels in the first panel are for transmitting the uplink signal indicating the information about the radiant intensity.

For example, it is assumed that the first panel includes panel#1, panel#2, and panel#3, that is, in step 201, the terminal device communicates with the network device by using panel#1, panel#2, and panel#3. For example, the network device may pre-indicate panel#3 used for the terminal device to report the information about the radiant intensity. In other words, when determining that the radiant intensity exceeds or is about to exceed the regulation constraint, the terminal device can send the uplink signal by using panel#3, to notify the information about the radiant intensity of the terminal device.

In another possible case, the network device indicates one or more panels for transmitting an uplink signal with another purpose, and the uplink signal may also be the uplink signal indicating the information about the radiant intensity.

For example, the terminal device applies to the network device for triggering beam management, or the terminal device applies to the network device for triggering beam management when determining that the radiant intensity exceeds or is about to exceed the regulation constraint. The network device performs configuration for the terminal device, for example, indicates panel#1 and panel#2, where panel#1 and panel#2 are used to transmit the uplink signal (for example, an SRS) for beam measurement. The terminal device transmits the uplink signal (for example, the SRS) by using panel#1 and panel#2 that are indicated by the network device. The uplink signal not only may be used for beam measurement, but also may be used to notify the information about the radiant intensity. For example, a flag bit may be used to notify the network device whether the terminal device experiences an MPE risk. Specifically, a description is provided below with reference to content of aspect 3.

In still another possible case, the network device indicates one or more specific panels for transmitting the uplink signal indicating the information about the radiant intensity.

Optionally, in implementation 2, for a purpose or a type of the uplink signal, refer to the descriptions in aspect 1.

Based on implementation 2, the terminal device can send the uplink signal by using one or more beams and/or one or more panels indicated by the network device, and notify the information about the radiant intensity by using the uplink signal.

Implementation 3: The terminal device sends the uplink signal by using a default beam and/or a default panel.

The default beam may be understood as a beam that does not require an indication by the network device or that does not require power reduction. Similarly, the default panel may be understood as a panel that does not require an indication by the network device or that does not require power reduction. For example, for the terminal device, the terminal device sends the uplink signal to the network device by using the default beam and/or the default panel, and the network device may receive the uplink signal by using a beam corresponding to the default beam and/or a panel corresponding to the default panel.

The beam is used as an example for description below.

In a possible case, the terminal device applies to the network device for triggering simplified uplink beam management, or the terminal device applies to the network device for triggering simplified uplink beam management when determining that the radiant intensity exceeds or is about to exceed the regulation constraint. The simplified beam management may be understood as that both the terminal device and the network device know a transceiver beam pair. The terminal device sends an uplink signal for beam management by using a known beam. Correspondingly, the network device receives the uplink signal by using a known beam and can learn of information about a radiant intensity by using the uplink signal.

In another possible case, the terminal device can send an uplink signal by using a default beam, and the uplink signal is specially used to notify the information about the radiant intensity. The default beam may be, for example, a beam for transmitting message 3 (Msg3).

Optionally, in implementation 3, for a purpose or a type of the uplink signal, refer to the descriptions in aspect 1.

Based on implementation 3, the terminal device can send the uplink signal by using one or more default beams and/or one or more default panels.

The foregoing describes, with reference to aspect 1 and aspect 2, resources (the uplink signal, the beam, and the panel) for reporting. It should be understood that the content of the foregoing aspect 1 and aspect 2 may be used in combination, or may be used separately. For example, the terminal device can send an uplink signal for beam management by using a beam and/or a panel after power reduction, and the uplink signal can be further used to notify information about a radiant intensity. For example, the uplink signal is an SRS.

The following describes reported content with reference to aspect 3.

### Aspect 3: Reported content.

The terminal device can send an uplink signal to the network device, to notify the network device of information about a radiant intensity. The information about the radiant intensity indicates radiant intensity-related information when the terminal device performs communication by using a current beam and/or a current panel.

For example, the information about the radiant intensity may include one or more of the following: a PD, an MPE percentage, transmitted power, an identifier of an uplink transmission duty cycle, a value of the uplink transmission duty cycle, a candidate transmit beam or panel, alarm information, a power reduction identifier, a power reduction value, power headroom or energy headroom, quality of a beam and/or a panel of the terminal device after power reduction, and the like. By notifying the network device of the information, the terminal device can help the network device estimate whether a current or future radiant intensity of the terminal device exceeds a regulation limit (for example, whether the current or future radiant intensity meets an MPE constraint), and further determine whether a current configuration of the network device causes radiation sent by the terminal device to exceed the regulation limit. In addition, by notifying the network device of the information, the terminal device can help the network device perform proper scheduling and configuration for subsequent communication, or transmit a signal or a channel (that is, receive and send a signal or a channel). For example, the terminal device can send a signal or data based on a scheduled or estimated beam and/or panel. Correspondingly, the network device receives the signal or the data by using a corresponding beam and/or panel.

The MPE percentage is a percentage compared to the MPE constraint. The MPE percentage means that X% MPE is reached and 100% MPE means that 1 (mW/cm²) is reached. FCC MPE may be limited to 1 (mW/cm²).

A unit of the PD may be milliwatt/square centimeter (mW/cm²). For example, the transmitted power may include EIRP. A unit of the EIRP is mW or dBm.

The alarm information may be that, for example, an MPE risk occurs, an MPE problem occurs, or a radiant intensity exceeds a regulation constraint, or the alarm information may be that an MPE risk is about to occur, an MPE problem is about to occur, or a radiant intensity is about to exceed a regulation constraint. The terminal device can notify the network device by using the uplink signal that performing uplink transmission by using a currently configured or currently used beam (that is, the first beam) or panel (that is, the first panel) exceeds the MPE constraint. In other words, the terminal device can report occurrence of the MPE risk or occurrence of the MPE problem to the network device by using the uplink signal, to notify the network device that a current configuration causes radiation sent by the terminal device to exceed the regulation limit. The network device can perform, based on the alarm information, proper scheduling and configuration for the terminal device to perform uplink transmission. In addition, the network device can also transmit a signal or a channel (that is, receive and send a signal or a channel). For example, the terminal device can send a signal or data based on a scheduled or estimated beam and/or panel. Correspondingly, the network device receives the signal or the data by using a corresponding beam and/or panel.

It should be understood that the information about the radiant intensity listed above is merely an example for description, and is not limited thereto. Any information related to radiation of the terminal device falls within the protection scope of embodiments of this application.

Optionally, the information about the radiant intensity may be carried in the uplink signal or parameter information of the uplink signal.

For example, the terminal device notifies the information about the radiant intensity by using a beam and/or a panel after power reduction.

The panel is used as an example. It is assumed that the first panel includes panel#1 and panel#2, that is, in step 201, the terminal device communicates with the network device by using panel#1 and panel#2. For example, when the terminal device determines that a radiant intensity exceeds or is about to exceed the regulation constraint, the terminal device sends an uplink signal by using panel#1 and panel#2 after power reduction, and notifies, through power reduction, the network device that the terminal device experiences an MPE risk.

For another example, the terminal device notifies the information about the radiant intensity by using another parameter information of the uplink signal.

The beam is used as an example. For example, the terminal device sends an uplink signal by using a default beam or a beam indicated by the network device. Another parameter information of the uplink signal may include, for example, but is not limited to, parameters such as a time-frequency offset and a phase offset, and may carry the information about the radiant intensity.

Optionally, the network device can determine, in any one of the following manners, whether the terminal device experiences the MPE risk.

Manner 1: The network device determines, based on a plurality of beams and/or a plurality of panels used by the terminal device to send uplink signals, whether the terminal device meets an MPE constraint currently or in future.

For example, when transmitting information about a radiant intensity by using an uplink signal, the terminal device sends the uplink signals by using a plurality of beams after power reduction and/or a plurality of panels after power reduction. Based on this, the network device can determine that the radiant intensity of the terminal device exceeds or is about to exceed the regulation constraint.

The panel is used as an example. It is assumed that the first panel includes panel#1 and panel#2, that is, in step 201, the terminal device communicates with the network device by using panel#1 and panel#2. When the terminal device determines that the radiant intensity exceeds or is about to exceed the regulation constraint, the terminal device sends the uplink signal by using panel#1 and panel#2 after power reduction. Based on this, the network device can determine that the radiant intensity of the terminal device exceeds or is about to exceed the regulation constraint. The network device determines in a plurality of manners whether the terminal device performs power reduction. This is not limited in embodiments of this application. For example, the network device may compare power of currently received panel#1 and power of currently received panel#2 with power of previously received panel#1 and power of previously received panel#2. After the power changes, the network device can determine that the terminal device performs power reduction.

For another example, when transmitting information about a radiant intensity by using an uplink signal, the terminal device sends the uplink signals by using a plurality of beams after power reduction and/or a plurality of panels after power reduction, where reduced power of the plurality of beams and/or reduced power of the plurality of panels are/is different. Based on this, the network device can determine that the radiant intensity of the terminal device exceeds or is about to exceed the regulation constraint.

The panel is used as an example. It is assumed that the first panel includes panel#1 and panel#2, that is, in step 201, the terminal device communicates with the network device by using panel#1 and panel#2. When the terminal device determines that the radiant intensity exceeds or is about to exceed the regulation constraint, the terminal device sends the uplink signal by using panel#1 and panel#2 after power reduction, where reduced power of panel#1 and reduced power of panel#2 are different. Based on this, the network device can determine that the radiant intensity of the terminal device exceeds or is about to exceed the regulation constraint.

Based on the manner 1, the terminal device may implicitly indicate the information about the radiant intensity to the network device. To be specific, the information about the radiant intensity is indicated by using a plurality of beams and/or a plurality of panels for sending the uplink signals, and the network device determines the information about the radiant intensity based on the plurality of beams and/or the plurality of panels for sending the uplink signals.

Manner 2: The terminal device may indicate, to the network device, whether an MPE risk is experienced or is to be experienced.

For example, a flag bit is used to notify the network device whether the terminal device experiences or is about to experience an MPE risk. The flag bit may be, for example, 1 bit (bit), for example, may be implemented by using a 1-bit flag bit, or may be implemented by using a value of a field of the flag bit. If a value of the field of the bit is "1", it indicates that the terminal device experiences the MPE problem, or if a value of the field of the bit is "0", it indicates that the terminal device does not experience the MPE problem. Alternatively, the flag bit may be implemented by using a 'P' bit carried in a power headroom report (power headroom report, PHR). Alternatively, the network device may be notified by separately designing a physical layer flag bit. The network device can determine, based on the reported flag bit, whether the terminal device experiences or is about to experience the MPE risk.

Based on the manner 2, the terminal device may explicitly indicate, to the network device, whether the MPE risk is experienced or is to be experienced.

Manner 3: The network device may estimate, based on the information about the radiant intensity, whether the terminal device meets the MPE constraint currently or in future.

For example, the information about the radiant intensity may include one or more of the following: a PD, an MPE percentage, transmitted power, or the like. By notifying the network device of the information by using the uplink signal, the terminal device can help the network device estimate whether the terminal device meets the MPE constraint currently or in future, and further determine whether a current configuration of the network device causes radiation sent by the terminal device to exceed the regulation limit.

Based on the manner 3, the network device can estimate whether the terminal device meets the MPE constraint currently or in future.

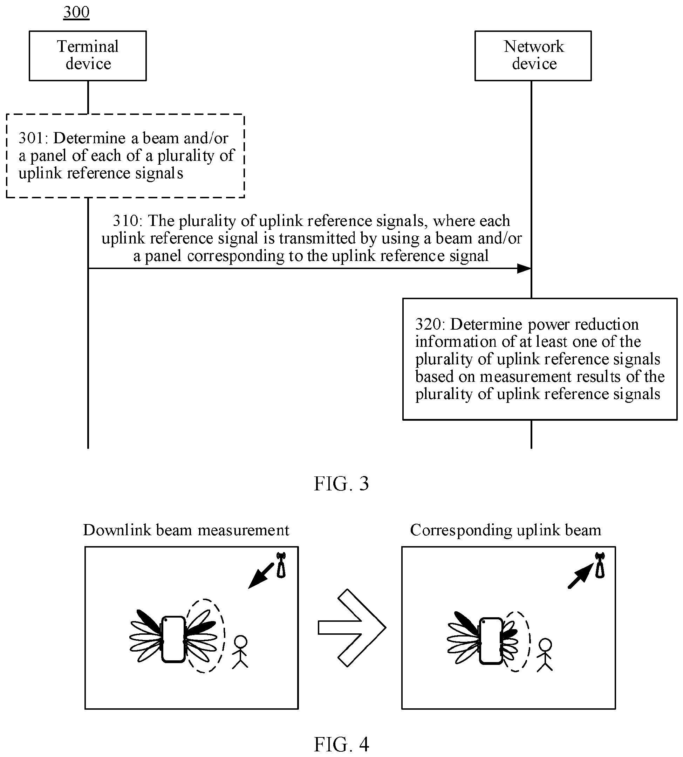

The foregoing manners are merely examples for description, and are not limited thereto. For ease of understanding, the following describes, with reference to FIG. 3, a possible implementation procedure applicable to the foregoing manner 1.

FIG. 3 is a schematic flowchart of a method 300 applicable to an embodiment of this application.

310: A terminal device sends a plurality of uplink reference signals to a network device, where each uplink reference signal is transmitted by using a beam and/or a panel corresponding to the uplink reference signal.

The uplink reference signal may be, for example, an SRS. For a function of the uplink signal, refer to the descriptions in the foregoing aspect 1. Details are not described herein again.

Optionally, before step 310, the method 300 may further include step 301.

301: The terminal device determines the beam and/or the panel of each of the plurality of uplink reference signals.

For beams and/or panels used for the plurality of uplink reference signals, refer to the content in the foregoing aspect 2.

For example, the terminal device can send a plurality of uplink reference signals on different beams and/or different panels, and the network device receives the plurality of uplink reference signals by using corresponding beams and/or panels. For example, considering power reduction, the terminal device can send a plurality of uplink reference signals on different beams and/or different panels. Therefore, not only transmission reliability can be improved, but also a status of a radiant intensity can be implicitly indicated to the network device by using a status of power reduction on each beam and/or panel.

For another example, the terminal device sends a plurality of uplink reference signals by using default beams and/or default panels, or the terminal device sends a plurality of uplink reference signals by using beams and/or panels indicated by the network device. Correspondingly, the network device receives the plurality of uplink reference signals by using corresponding beams and/or panels (that is, known beams and/or panels).

Specifically, for a beam and/or a panel used for the uplink reference signal, refer to the foregoing descriptions. Details are not described herein again.

Optionally, when a preset condition is met, the terminal device determines the beam and/or the panel of each of the plurality of uplink reference signals.

In this embodiment of this application, when a specific condition is met, the terminal device is triggered to send the plurality of uplink reference signals. For example, when a radiant intensity risk occurs, the terminal device sends the plurality of uplink reference signals. In other words, because the radiant intensity of the terminal device exceeds or is about to exceed the regulation limit, the terminal device performs power reduction, that is, transmits the uplink reference signals by using beams and/or panels after power reduction, so that the radiant intensity of the terminal device meets the regulation.

A condition for triggering the terminal device to send the plurality of uplink reference signals is not limited. For example, after determining that the radiant intensity exceeds the regulation constraint, for example, after determining that an MPE problem occurs, the terminal device sends the plurality of uplink reference signals to the network device. For another example, after determining that the radiant intensity is about to exceed the regulation constraint, for example, after determining that the MPE problem is about to occur, the terminal device sends the plurality of uplink reference signals to the network device. For still another example, the terminal device may periodically send the plurality of uplink reference signals to the network device, for periodically performing beam measurement.

320: The network device determines power reduction information of at least one of the plurality of uplink reference signals based on measurement results of the plurality of uplink reference signals.

Optionally, the network device can perform beam measurement by using the plurality of uplink reference signals. Beam measurement is to obtain beam quality information by measuring an uplink reference signal (for example, an SRS). A parameter for measuring beam quality includes, but is not limited to, reference signal received power (reference signal received power, RSRP). For example, the beam quality may also be measured by using parameters such as reference signal received quality (reference signal receiving quality, RSRQ), a signal-to-noise ratio (signal-to-noise ratio, SNR), and a signal to interference plus noise ratio (signal to interference plus noise ratio, SINR) (a signal to interference plus noise ratio for short).

In step 320, that the network device determines the power reduction information of the uplink reference signal may be understood as that the network device determines whether power reduction is performed on a beam and/or a panel for sending the uplink reference signal, or may be understood as that the network device determines a status of power reduction on each beam and/or each panel for sending the uplink reference signal (for example, whether power reduction values are different). In addition, the network device may determine, depending on whether power reduction is performed on the beam and/or the panel, or based on the status of power reduction, whether the terminal device meets the MPE constraint currently or in future.

In a possible implementation, the network device determines, based on the plurality of uplink reference signals, quality of a plurality of beams and/or a plurality of panels corresponding to the plurality of uplink reference signals; and determine the power reduction information of the at least one of the plurality of uplink reference signals based on the determined quality of the plurality of beams and/or the plurality of panels and stored quality of the plurality of beams and/or the plurality of panels.

The panel is used as an example. It is assumed that a plurality of panels include panel#1, panel#2, panel#3, and panel#4, and it is assumed that the stored quality of the plurality of panels in descending order is: panel#1, panel#2, panel#3, and panel#4.

For example, if the quality of the panels determined by the network device in descending order is panel#2, panel#1, panel#3, and panel#4, the network device can determine that power reduction is performed on at least panel#1.

The stored quality of the plurality of beams and/or the plurality of panels is recorded during historical beam measurement, for example, the quality of the plurality of beams and/or the plurality of panels is recorded in a previous beam measurement process.

Optionally, the stored quality of the plurality of beams and/or the plurality of panels may include comparison of the quality of the plurality of beams and/or the plurality of panels. For example, the stored quality of the plurality of panels includes: Quality of the plurality of panels in descending order is panel#1, panel#2, panel#3, and panel#4.

Optionally, the stored quality of the plurality of beams and/or the plurality of panels may also include quality of each beam and/or each panel. In a possible implementation, the stored quality of each beam and/or each panel is determined based on a corresponding downlink reference signal.

Optionally, a beam and/or a panel of uplink data may be at least any one of the following: a beam and/or a panel with best beam quality in the plurality of beams and/or the plurality of panels, a beam and/or a panel with power reduction in the plurality of beams and/or the plurality of panels, a beam and/or a panel without power reduction in the plurality of beams and/or the plurality of panels, or a default or an agreed beam and/or panel. The default or agreed beam and/or panel may be a beam and/or a panel with best quality; or the default or agreed beam and/or panel may include a beam and/or a panel whose quality meets a specific threshold; or the default or agreed beam and/or panel may include a beam and/or a panel with power reduction; or the default or agreed beam and/or panel may include a beam and/or a panel without power reduction; or the like. This is not limited.

For the network device, the network device can perform beam measurement by using the plurality of uplink reference signals, that is, obtain the beam quality information by measuring the uplink reference signals (for example, SRSs). The network device can determine the beam and/or the panel of the uplink data from the plurality of beams and/or the plurality of panels based on the determined quality information of the plurality of beams and/or the plurality of panels. Further, the network device can also receive the uplink data by using a receive beam and/or a receive panel corresponding to the beam and/or the panel of the uplink data.

For the terminal device, in a possible implementation, the terminal device determines the beam and/or the panel of the uplink data based on an indication by the network device. Based on this implementation, the network device can determine power reduction information of some or all of the uplink reference signals based on the measurement results of the plurality of uplink reference signals, and can further perform proper scheduling and configuration for the terminal device based on the power reduction information. In another possible implementation, the terminal device determines the beam and/or the panel of the uplink data based on the quality of the plurality of beams and/or the plurality of panels.

For the terminal device, the terminal device can learn of beam quality (namely, uplink beam quality) in at least any one of the following manners.

In a manner, the terminal device can deduce quality of an uplink beam based on quality of a downlink beam.

The terminal device can perform downlink beam measurement and maintenance. Before the MPE problem occurs or in a previous measurement periodicity, the terminal device can learn of, based on CSI-RS or quality of each available downlink beam through channel reciprocity, quality of a corresponding uplink beam before the MPE problem occurs. After the MPE problem occurs, the terminal device may need to perform power reduction. Therefore, the terminal device can obtain quality of each beam after reduction based on the previously obtained quality of the uplink beam with reference to currently reduced power.

In another manner, the terminal device can perform uplink beam management, to learn of quality of an uplink beam.

The terminal device can perform uplink beam management, namely, uplink beam measurement and maintenance, by using the SRS (SRS for Beam management) for beam management. Before the MPE problem occurs or in a previous measurement periodicity, the network device can notify the network device of quality of a corresponding uplink beam by using downlink signaling. After the MPE problem occurs, the terminal device may need to perform power reduction. Therefore, the terminal device can obtain quality of each beam after reduction based on the previously obtained quality of the uplink beam with reference to currently reduced power.

It should be understood that, after any one of the foregoing manners, when determining beam quality, the terminal device considers reduced power. For example, the terminal device obtains quality of each beam after reduction based on previously obtained quality of a downlink beam with reference to currently reduced power. For another example, the terminal device obtains quality of each beam after reduction based on previously obtained quality of an uplink beam and currently reduced power.

It should be further understood that the foregoing two manners are merely examples for description, and any manner in which the terminal device can learn of or deduce the quality of the uplink beam is applicable to this embodiment of this application.

The foregoing separately describes the manners of learning beam quality from perspectives of the network device and the terminal device. The following describes several possible cases by using a panel as an example.

In a possible case, the panel of the uplink data is a panel with best quality in the plurality of panels.

It is assumed that the plurality of panels include panel#1, panel#2, panel#3, and panel#4. For the network device, if the network device determines, according to a criterion, that quality of the panels in descending order is panel#2, panel#1, panel#3, and panel#4, the network device can determine panel#2 as the panel of the uplink data, that is, the network device receives the uplink data by using the panel corresponding to panel#2. For the terminal device, the terminal device obtains quality of each beam after reduction based on previously obtained quality of an uplink beam or a downlink beam with reference to currently reduced power. The terminal device determines, according to a specific criterion, to select panel#2 with best quality as the panel of the uplink data, that is, the terminal device sends the uplink data by using panel#2. The criterion is not limited. For example, the criterion may be that L1-RSRP/an L1-SINR is the largest.

In this case, the terminal device and the network device may pre-agree that a panel with maximum L1-RSRP/ a maximum L1-SINR is used as the panel of the uplink data. Alternatively, after receiving a plurality of uplink reference signals, the network device can send indication information to the terminal device, to indicate the terminal device to send the uplink data by using a panel with maximum L1-RSRP/ a maximum L1-SINR.

It should be understood that, in this case, the beam quality is beam quality after reduction is considered. Panel#1, panel#2, panel#3, and panel#4 are still used as an example. It is assumed that after an MPE problem occurs, the terminal device respectively sends uplink reference signals by using panel#1, panel#2, panel#3, and panel#4, and the terminal device performs power reduction on transmitted power when sending the uplink reference signals by using panel#1 and panel#2. When determining a panel with best quality in the panels, the terminal device or the network device determines quality of panel#1 after power reduction, quality of panel#2 after power reduction, quality of panel#3 without power reduction, and quality of panel#4 without power reduction.

In another possible case, the panel of the uplink data includes a panel with power reduction in the plurality of panels.

It is assumed that the plurality of panels include panel#1, panel#2, panel#3, and panel#4. For the network device, if the network device determines that power reduction is performed on panel#1 and panel#2, the network device may determine panel#1 and panel#2 as the panels of the uplink data. In other words, the network device receives the uplink data by using a panel corresponding to panel#1 and a panel corresponding to panel#2. For the terminal device, the terminal device determines, based on a status of currently reduced power, that power reduction occurs on panel#1 and panel#2, and therefore determines panel#1 and panel#2 as the panels of the uplink data. In other words, the terminal device sends the uplink data by using panel#1 and panel#2.

In this case, the terminal device and the network device may pre-agree that a panel with power reduction is used as the panel of the uplink data. Alternatively, after receiving the plurality of uplink reference signals, the network device can send indication information to the terminal device, to indicate the terminal device to send the uplink data by using a panel with power reduction.

In still another possible case, the panel of the uplink data includes a panel without power reduction in the plurality of panels.

It is assumed that the plurality of panels include panel#1, panel#2, panel#3, and panel#4. For the network device, if the network device determines that power of panel#3 and panel#4 is not backed off, the network device can determine panel#3 and panel#4 as the panels of the uplink data. In other words, the network device receives the uplink data by using a panel corresponding to panel#3 and a panel corresponding to panel#4. For the terminal device, the terminal device determines, based on a status of currently reduced power, that power of panel#3 and panel#4 is not backed off, and therefore determines panel#3 and panel#4 as the panels of the uplink data. In other words, the terminal device sends the uplink data by using panel#3 and panel#4.

In this case, the terminal device and the network device may pre-agree that a panel without power reduction is used as the panel of the uplink data. Alternatively, after receiving the plurality of uplink reference signals, the network device can send indication information to the terminal device, to indicate the terminal device to send the uplink data by using a panel without power reduction.

It should be understood that the foregoing possible cases are merely examples for description, and are not limited thereto. For example, the network device may alternatively reconfigure, for the terminal device, a beam and/or a panel for sending the uplink data, and the network device may further indicate information about the beam and/or the panel to the terminal device. For another example, the panel of the uplink data may also include a panel whose quality meets a specific threshold. For another example, the panel of the uplink data may also include x different panels, where x is an integer greater than 1.

Optionally, the network device may indicate the information about the beam and/or the panel of the uplink data to the terminal device, or the network device may not indicate the information about the beam and/or the panel of the uplink data to the terminal device, which may be, for example, pre-agreed, preset, or specified in a protocol. This is not limited, provided that a receive end and a transmit end are aligned, that is, the network device is aligned with the terminal device.

The foregoing separately describes the form of the uplink signal, the beam and/or the panel used for the uplink signal, and reported content with reference to aspect 1 to aspect 3. The content in the foregoing aspects may be used independently or in combination.

For ease of understanding, a description is provided below by using an example in which the uplink signal is an SRS with reference to two different scenarios.

### Scenario 1: The SRS is used for beam management.

In other words, in scenario 1, the terminal device can notify the network device of information about a radiant intensity by using the SRS for beam management, as shown in FIG. 4.

The terminal device reports an MPE problem to the network device, and the network device can determine, in the several manners described in the foregoing aspect 3, that the terminal device experiences the MPE problem. For beams and/or panels used by the terminal device and the network device for subsequent transmission, at least the following several possible cases are included.

In a possible case, the terminal device determines that a radiant intensity exceeds or is about to exceed a regulation constraint, for example, the terminal device determines that an MPE problem occurs or is about to occur, and sends an application to the network device to trigger simplified uplink beam management. The simplified beam management may be understood as that both the terminal device and the network device know a transceiver beam pair. A beam pair for transmission is trained in a beam management procedure. For example, the network device configures the terminal device to send and measure an SRS; the network device determines a transmit beam and/or panel of the terminal device based on a measurement result; and the terminal device determines an uplink beam and/or panel for sending data.

In another possible case, the network device knows that the radiant intensity exceeds or is about to exceed the regulation constraint, for example, the network device knows that the MPE problem occurs or is about to occur, and initiates or configures triggering of a conventional beam management procedure. A beam pair for transmission is trained in a beam management procedure. For example, the network device schedules an aperiodic SRS for beam management (BM based AP-SRS), or the network device reconfigures a periodic SRS (P-SRS) or a semi-persistent SRS (SP-SRS) for sending. Each SRS resource is sent by using different beams and/or different panels. After receiving all the SRSs, the network device determines a beam and/or a panel for receiving a PUSCH, for example, may determine an optimal beam and/or panel for receiving the PUSCH.

In still another possible case, the terminal device determines that the radiant intensity exceeds or is about to exceed the regulation constraint, for example, the terminal device determines that the MPE problem occurs or is about to occur, the terminal device performs sending by using a beam and/or a panel after power reduction, and the network device performs reception by using a known corresponding beam and/or panel. The known beam and or panel, that is, the beam pair for transmission that has been trained in the conventional beam management procedure before the MPE problem occurs. For example, the terminal device aperiodically sends SRSs for beam management transmission (BM based AP-SRS) by using different beams and/or different panels, and the network device respectively receives the SRSs by using known corresponding beams and/or panels. Then, the terminal device can send the PUSCH by using an optimal beam and/or panel, and the network device receives the PUSCH by using a corresponding receive beam.

It should be understood that a beam for receiving and sending a PUSCH is not limited. For example, a beam with good quality (for example, an optimal beam) may be used, or may be pre-agreed, or preset, or specified in a protocol, or indicated by the network device or the terminal device, or the like. This is not limited, provided that a receive end and a transmit end are aligned, that is, the network device is aligned with the terminal device. For ease of understanding, in this embodiment of this application, an optimal beam is mainly used as an example for description.

Several possible cases are listed above, and this is not limited thereto.

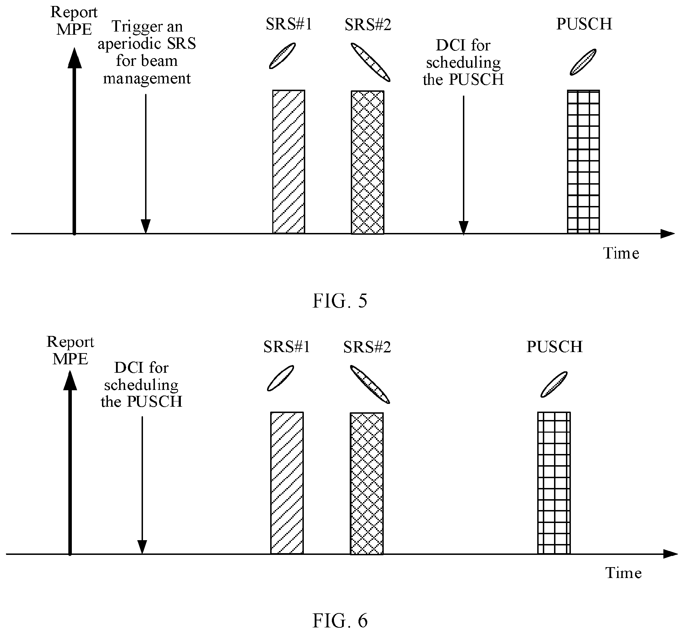

FIG. 5 is a schematic diagram of scenario 1. FIG. 5 is used as an example, and it is assumed that the network device schedules an aperiodic SRS for beam management. The SRS may be configured by the network device by using RRC, and the network device may deliver signaling (for example, DCI signaling) to indicate the terminal device to send the SRS. As shown in FIG. 5, after MPE reporting is triggered, the network device delivers DCI to the terminal device, where the DCI is used to trigger an aperiodic SRS for beam management, that is, used to trigger the terminal device to send the SRS. After receiving the DCI, the terminal device sends the SRSs by using different beams and/or different panels, for example, the terminal device sends SRS#1 by using one beam and/or one panel, and sends SRS#2 by using another beam and/or another panel. After receiving all the SRSs, for example, after receiving SRS#1 and SRS#2, the network device determines to receive the PUSCH by using an optimal beam and/or panel. The network device delivers DCI to the terminal device, where the DCI is used to schedule a resource, for example, an uplink beam and/or panel, for the terminal device to send the PUSCH, and the terminal device sends the PUSCH to the network device based on the scheduled resource of the network device. The network device receives the PUSCH based on the determined optimal beam and/or panel. As shown in FIG. 5, the terminal device can send the PUSCH by using the beam and/or the panel for sending SRS#1. Correspondingly, the network device can receive the PUSCH by using a beam and/or a panel corresponding to the beam and/or the panel.

Based on scenario 1, the network device may be notified by using an uplink signal (for example, an SRS) for beam management that the terminal device experiences the MPE problem, and it can be ensured that receive beams and transmit beams of the network device and the terminal device are aligned (for example, an optimal beam may be used), thereby ensuring system performance. Therefore, according to the solution in this embodiment of this application, reliability can be improved, system robustness can be enhanced, and signaling overheads can be reduced.

### Scenario 2: The SRS is used for CB-based or NCB-based transmission.

In other words, in scenario 2, the terminal device can notify the network device of information about a radiant intensity by using the SRS for CB-based or NCB-based transmission.

The terminal device reports an MPE problem to the network device, and the network device can determine, in the several manners described in the foregoing aspect 3, that the terminal device experiences the MPE problem. For beams and/or panels used by the terminal device and the network device for subsequent transmission, at least the following several possible cases are included.

In a possible case, the network device schedules an aperiodic SRS for CB-based or NCB-based (CB/NCB based AP-SRS) transmission, or the network device reconfigures a periodic SRS (P-SRS) or a semi-persistent SRS (SP-SRS) for sending. Each SRS resource is sent by using different beams and/or different panels. After receiving all the SRSs, the network device can determine to receive a PUSCH by using a beam and/or a panel with good quality, for example, receive the PUSCH by using a beam and/or a panel with best quality.

In another possible case, the terminal device aperiodically sends SRSs for CB-based or NCB-based (CB/NCB-based AP-SRS) transmission by using different beams and/or different panels, and the network device respectively receives the SRSs by using corresponding beams. Then, the terminal device sends a PUSCH by using a beam and/or a panel with good quality, and the network device receives the PUSCH by using a corresponding receive beam. For example, the terminal device aperiodically sends SRSs for CB-based or NCB-based (CB/NCB-based AP-SRS) transmission by using different beams, and the network device respectively receives the SRSs by using corresponding beams. Then, the terminal device receives the PUSCH by using a beam with good quality, and the network device receives the PUSCH by using a corresponding receive beam. For another example, the terminal device aperiodically sends SRSs for CB-based or NCB-based (CB/NCB-based AP-SRS) transmission by using different panels, and the network device respectively receives the SRSs by using corresponding panel. Then, the terminal device sends the PUSCH by using a panel with good quality, and the network device receives the PUSCH by using a corresponding receive panel.

It should be understood that a beam for receiving and sending a PUSCH is not limited. For example, a beam with good quality (for example, an optimal beam) may be used, or may be pre-agreed, or preset, or specified in a protocol, or indicated by the network device or the terminal device, or the like. This is not limited, provided that a receive end and a transmit end are aligned, that is, the network device is aligned with the terminal device.

FIG. 6 is a schematic diagram of scenario 2. FIG. 6 is used as an example. The network device delivers DCI to the terminal device, where the DCI may be DCI for scheduling a PUSCH. The terminal device sends SRSs by using different beams and/or different panels, for example, the terminal device sends SRS#1 by using one beam and/or one panel, and sends SRS#2 by using another beam and/or another panel. After receiving all the SRSs, for example, after receiving SRS#1 and SRS#2, the network device determines to receive the PUSCH by using a beam and/or a panel with good quality. As shown in FIG. 6, the terminal device may send the PUSCH by using the beam and/or the panel for sending SRS#1. Correspondingly, the network device may receive the PUSCH by using a beam and/or a panel corresponding to the beam and/or the panel.

Based on scenario 2, the network device may be notified by using an uplink signal (for example, an SRS) for CB-based or NCB-based transmission that the terminal device experiences the MPE problem, and it can be ensured that receive beams and transmit beams of the network device and the terminal device are aligned (for example, an optimal beam may be used), thereby ensuring system performance. Therefore, according to the solution in this embodiment of this application, reliability can be improved, system robustness can be enhanced, and signaling overheads can be reduced.

The description is provided above by using an example in which the uplink signal is the SRS with reference to the two scenarios. As described above, the uplink signal may have a plurality of forms, and there may be different implementations for different forms. For example, an example in which the uplink signal is a preamble is used for description.

In a possible implementation, the network device may configure a dedicated preamble, to notify the network device that the MPE problem occurs on the terminal device. In other words, the dedicated preamble is specially used to notify the network device that the MPE problem occurs on the terminal device. In addition, further, different preamble sets or preamble attributes such as an access occasion (Rach occasion), a preamble sequence offset, and a preamble sequence number, may be used to represent different reduced power values. For example, this manner may be used in a non-contention-based random access process. After receiving the preamble, the network device may notify, for example, in message 2 (Msg2), a beam and/or a panel used by the terminal device, for example, a beam and/or a panel used by the terminal device for sending a signal or a channel (for example, a data channel).

In another possible implementation, the terminal device may select any preamble for access, and the terminal device carries information about a radiant intensity (for example, an MPE problem occurs or a reduced power value) in Msg3. This manner may be used in a contention-based random access process. The network device may notify, for example, in message 4 (Msg4), a panel or a beam used by the terminal device, for example, a beam and/or a panel used by the terminal device for sending a signal or a channel (for example, a data channel).

It should be understood that the foregoing two implementations are merely examples for description, and are not strictly limited thereto. Any case falls within the protection scope of embodiments of this application provided that the terminal device can notify the network device of the information about the radiant intensity (for example, the MPE problem occurs or the reduced power value) in a random access process.

It should be further understood that, in the foregoing embodiments, the terminal device selects a beam and/or a panel to send a signal or a channel (for example, a data channel PUSCH), and the beam may include one or more beams, and the panel may include one or more panels. The beam and/or the panel are/is not strictly limited.

For example, the beam and/or the panel may be selected according to a criterion. For example, the criterion may be a protocol constraint, that is, the terminal device sends a signal or a channel by using a beam and/or a panel agreed in a protocol. For another example, the criterion may be notified by the network device, that is, the terminal device sends a signal or a channel based on a beam and/or a panel notified by the network device. For another example, the criterion may alternatively be implemented by the terminal device, that is, the terminal device sends a signal or a channel based on a beam and/or a panel determined by the terminal device.

For still another example, the beam and/or the panel may be a default or pre-agreed beam and/or panel. For example, the beam and/or the panel may be of best quality in activated beams and/or activated panels of the terminal device. For another example, the beam and/or the panel may be a beam and/or a panel after power reduction. For another example, the beam and/or the panel may be a beam and/or a panel without power reduction. For another example, the beam and/or the panel may be a beam and/or a panel whose quality is greater than a threshold.

With reference to FIG. 2 to FIG. 6, the foregoing mainly uses the MPE constraint as an example to describe content of radiant intensity reporting (that is, MPE reporting). The following describes content of radiant intensity management.

In this embodiment of this application, the terminal device may maintain MPE constraint management for a beam or a panel. For example, the following two solutions may be included.

Solution 1: The terminal device maintains a set of radiant intensity management information for each beam or each panel.

Solution 2: The terminal device maintains a set of radiant intensity management information for all beams or all panels.

For ease of understanding, the following still uses the MPE constraint as an example to describe the two solutions in detail.

### Solution 1

The terminal device maintains a set of radiant intensity management information for each beam or each panel. For example, the terminal device maintains a set of MPE management information for each beam or each panel, or the terminal device maintains a set of MPE constraint management for each beam or each panel. It may be understood that each beam or each panel represents an activated beam or an activated panel.

The MPE management information maintained by the terminal device for each beam or each panel may include, for example, but is not limited to: a start position of a time window, a window length L of the time window, a sliding distance S of the time window, a quantity N of sampling points in the time window, a radiant intensity threshold or derived value, a transmitted power threshold, a transmitted power reduced range, an energy threshold, and an energy reduced range.

The time window, for example, may also be referred to as an evaluation window and indicates that the terminal device evaluates, in a time window corresponding to each beam or each panel, whether an MPE problem occurs on the beam or the panel. Whether an MPE problem occurs on a current beam or a current panel indicates whether an MPE problem occurs when the terminal device performs communication by using the current beam or the current panel.

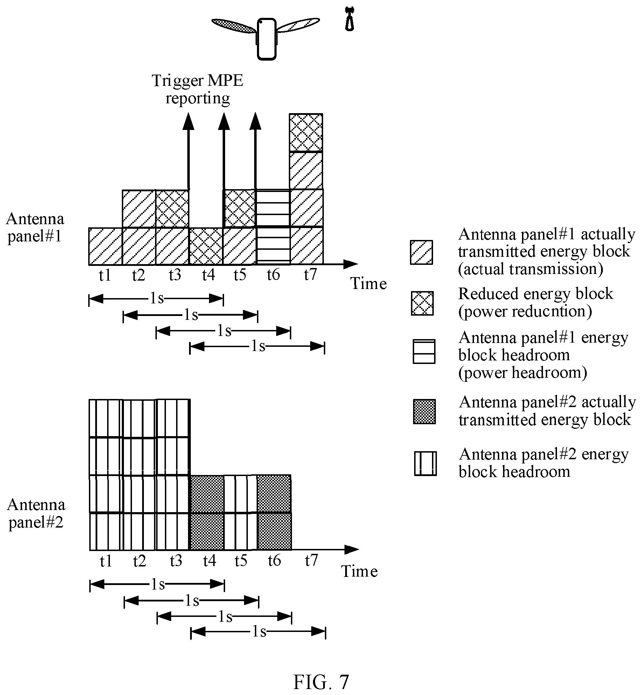

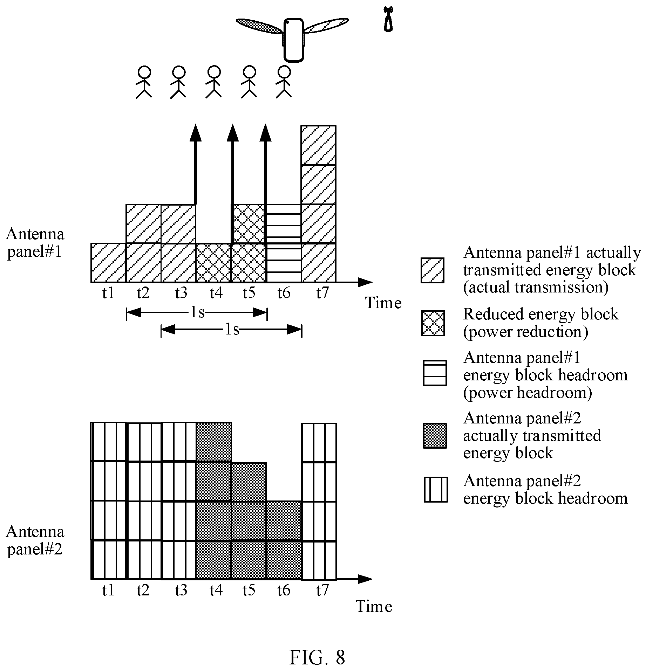

A specific length of the window length L of the time window (that is, a time length) may be pre-specified, for example, predefined in a protocol; or the time window may be notified by the network device to the terminal device, or the time window may be a time window estimated by the terminal device based on a radiant intensity; or the time window may be a default value, for example, ranging from 1 second (s) to 6 minutes (min). FIG. 7 and FIG. 8 are used as examples. A window length L of each time window is 1s.

The sliding distance S of the time window may be understood as an interval between start time of adjacent time windows. FIG. 7 and FIG. 8 are used as examples. A sliding distance of the time window is 0.25 ms.

The N sampling points in the time window may be understood as a quantity of samples, or whether the MPE problem occurs on the current beam or the current panel is determined based on a quantity of pieces of data.

There are a plurality of implementations for the terminal device to determine whether the MPE problem occurs on the current beam or the current panel.

In a possible implementation, the terminal device calculates average power or energy of all the N sampling points in the time window based on the sliding distance S of the time window. When the average power or energy of all the N sampling points in the time window is greater than a threshold, for example, denoted as a first threshold, it is determined that the MPE problem occurs on the current beam or the current panel, or when the average power or energy of all the N sampling points in the time window is less than the first threshold, it is determined that no MPE problem occurs on the current beam or the current panel.

The first threshold may be a pre-specified value, for example, a value predefined in a protocol, or a value pre-specified by the network device, or may be a constraint value or a conversion value, for example, a constraint value or a conversion value specified by the FCC or the ICNIRP.

A case in which the average power or energy of all the N sampling points in the time window is equal to the first threshold is not limited in this embodiment of this application. For example, when the average power or energy of all the N sampling points in the time window is equal to the first threshold, it may be considered that the MPE problem occurs on the current beam or the current panel. For another example, when the average power or energy of all the N sampling points in the time window is equal to the first threshold, it may be considered that no MPE problem occurs on the current beam or the current panel. For still another example, when the average power or energy of all the N sampling points in the time window is equal to the first threshold, it may be considered that the MPE problem is about to occur on the current beam or the current panel.

In another possible implementation, when sensing, by using a sensor, that a human body approaches at least one beam or panel, the terminal device calculates average power or energy of all the N sampling points in the time window based on the sliding distance S of the time window of the corresponding beam or panel. When the average power or energy of all the N sampling points in the time window is greater than the first threshold, it is determined that the MPE problem occurs on the current beam or the current panel, or when the average power or energy of all the N sampling points in the time window is less than the first threshold, it is determined that no MPE problem occurs on the current beam or the current panel. If the sensor does not sense that a human body approaches at least one beam or panel, the MPE problem on the at least one beam or panel may not be determined.

Optionally, after determining that the MPE problem occurs on the current beam or the current panel, or after determining that the MPE problem is about to occur on the current beam or the current panel, the terminal device can trigger the terminal device to perform MPE reporting.

Optionally, after determining that the MPE problem occurs on the current beam or the current panel, the terminal device may perform one or more of the following processing: reducing transmitted power, reducing an uplink transmission duty cycle, and switching a beam or panel.

For example, when the terminal device triggers an MPE problem within the time window, that is, the average power is greater than the first threshold, MPE reporting is triggered. After power reduction is performed on the current beam or the current panel, the terminal device compares the current beam or the current panel with another beam or another panel, and selects a beam or a panel for sending.

The following describes a procedure applicable to solution 1 with reference to FIG. 7 and FIG. 8. FIG. 7 shows non-sensor-based MPE constraint management, and FIG. 8 shows sensor-based MPE constraint management. It is assumed that a window length L of a time window is equal to 1s, a sliding distance S of the time window is equal to 0.25 ms, and N sampling points in the time window are equal to 4. It is assumed that up to four energy blocks are transmitted by the terminal device, that is, up to four energy blocks can be generated when the terminal device transmits data. It is assumed that a quantity of currently activated panels is 2, and the two activated panels include panel#1 and panel#2.

In this embodiment of this application, it is mentioned for a plurality of times that the terminal device sends one or more energy blocks on a panel. The energy block may represent an amount of electromagnetic field energy generated when the terminal device sends data by using the panel, or may represent an amount of radiation generated when the terminal device sends data by using the panel, or may represent a value of transmitted power when the terminal device transmits data. For example, fewer energy blocks indicate a smaller amount of generated radiation, and more energy blocks indicate a larger amount of generated radiation.

First, FIG. 7 is used as an example for description.

FIG. 7 shows non-sensor-based MPE constraint management. In other words, the terminal device calculates average power or energy of all the N sampling points in the time window based on the sliding distance S of the time window.
1. At a moment t1, the terminal device chooses, based on panel selection, to send one energy block on panel#1.
   The one energy block meets scheduling by the network device and uplink power control by the terminal device. In other words, at the moment t1, based on scheduling by the network device, the terminal device needs to send one energy block that is calculated based on power control information.
2. At a moment t2, the terminal device chooses, based on panel selection, to send two energy blocks on panel#1.
   The two energy blocks meet scheduling by the network device and uplink power control by the terminal device. In other words, at the moment t2, based on scheduling by the network device, the terminal device needs to send two energy blocks that are calculated based on the power control information.
3. At a moment t3, the terminal device determines, based on scheduling by the network device, panel selection, uplink power control, and the like, that two energy blocks need to be sent on panel#1.
It is assumed that, based on MPE evaluation, only one energy block can be sent on panel#1, that is, one energy block needs to be backed off. The reduced energy block may be understood, for example, as taking some measures to meet the MPE requirement. For example, reduction may be implemented by reducing transmitted power.

In a possible implementation, after power reduction, the terminal device can send one energy block on panel#1.

In another possible implementation, after power reduction, the terminal device can re-evaluate transmission effects of sending by using the current panel and sending by using another panel.

For example, the terminal device can re-evaluate transmission effects of sending only one energy block by using panel#1 and sending one energy block by using panel#2. In a possible case, after evaluation, the terminal device considers that it is also optimal that only one energy block is sent on panel#1, because panel#1 faces the network device, and panel#2 faces away the network device. Based on this case, the terminal device chooses to send one energy block on panel#1. In this manner, communication performance can also be ensured while the MPE requirement is met as much as possible.

For another example, the terminal device can re-evaluate a transmission effect of simultaneously sending one energy block by using panel#1 and panel#2. In a possible case, after evaluation, the terminal device considers, in consideration of the MPE constraint, the uplink power control, and the like, that it is optimal that only one energy block is sent on panel#1. Based on this case, the terminal device chooses to send one energy block on panel#1. In another possible case, after evaluation, the terminal device considers that one energy block can be simultaneously sent by using panel#1 and panel#2. In this manner, communication performance can also be ensured while the MPE requirement is met as much as possible.

It should be understood that only a case in which one energy block is sent on panel#1 is listed in FIG. 7. During actual communication, corresponding processing may be performed based on an evaluation result.

4. At a moment t4, the terminal device chooses, based on scheduling by the network device, panel selection, uplink power control, MPE constraint and selection, and the like, to send two energy blocks on panel#2.

It is assumed that panel#1 has no remaining energy blocks to send due to the MPE constraint. In other words, the terminal device cannot send data by using panel#1. Otherwise, the MPE requirement may not be met.

5. At a moment t5, similar to the moment t3, the terminal device chooses to send one energy block on panel#1.

6. At a moment t6, there are two remaining energy blocks on panel#1, and there are two remaining energy blocks on panel#2. The terminal device chooses, based on scheduling by the network device, panel selection, uplink power control, the MPE constraint, and the like, to send the two energy blocks on panel#2.

For example, as the terminal device rotates or a communication environment changes, panel#2 is better than panel#1, that is, the terminal device chooses to use panel#2.

7. At a moment t7, panel#2 has no remaining energy block to send, and the terminal device sends three energy blocks (one energy block is backed off) on panel#1.

Based on the foregoing solution, a panel-based or beam-based semi-static MPE management mechanism may be implemented. For example, the terminal device can perform management and monitoring based on corresponding management information. Therefore, panel-based or beam-based monitoring and management may be implemented without using a sensor, thereby reducing implementation complexity and costs.

Next, FIG. 8 is used as an example for description.

FIG. 8 shows sensor-based MPE constraint management. To be specific, when sensing, by using a sensor, that a human body approaches at least one beam or panel, the terminal device calculates average power or energy of all the N sampling points in the time window based on the sliding distance S of the time window of the corresponding beam or panel.
1. At a moment t1, the terminal device chooses, based on panel selection, to send one energy block on panel#1.

The one energy block meets scheduling by the network device and uplink power control by the terminal device. In other words, at the moment t1, based on scheduling by the network device, the terminal device needs to send one energy block that is calculated based on power control information.

At the moment t1, if the sensor does not sense that a human body approaches panel#1 and panel#2, the terminal device can normally perform communication by using panel#1 and panel#2, and does not need to determine the MPE problem.

2. At a moment t2, the terminal device chooses, based on panel selection, to send two energy blocks on panel#1.

At the moment t2, the sensor senses that a human body approaches panel#1, and the MPE problem on panel#1 is determined. The two energy blocks meet scheduling by the network device, uplink power control by the terminal device, MPE constraint selection, and the like. In other words, at the moment t2, the terminal device chooses, based on scheduling by the network device, panel selection, uplink power control, MPE constraint and selection, and the like, to send two energy blocks on panel#1.

3. At a moment t3, the terminal device chooses, based on panel selection, to send two energy blocks on panel#1.

The two energy blocks meet scheduling by the network device, uplink power control by the terminal device, MPE constraint selection, and the like.

4. At a moment t4, the terminal device determines, based on scheduling by the network device, panel selection, uplink power control, and the like, that one energy block needs to be sent on panel#1 and three energy blocks need to be sent on panel#2.

It is assumed that, based on the MPE evaluation, the energy block cannot be sent on panel#1.

In a possible implementation, after power reduction, the terminal device may send no energy block on panel#1, but send three energy blocks on panel#2.

In another possible implementation, after power reduction, the terminal device may send no energy block on panel#1. In addition, considering that the no human body approaches panel#2, the terminal device may directly choose to send four energy blocks (that is, three energy blocks of panel#2 plus one energy block backed off from panel#1) on panel#2.

In still another possible implementation, after power reduction, the terminal device may send no energy block on panel#1, and re-evaluate a transmission effect of sending the four energy blocks by using panel#2. In a possible case, after evaluation, the terminal device considers that the four energy blocks can be sent by using panel#2. Based on this case, the terminal device chooses to send no energy block on panel#1, and send the four energy blocks on panel#2. In this manner, communication performance can also be ensured while the MPE requirement is met as much as possible.

It should be understood that only a case in which four energy blocks are sent on panel#2 is listed in FIG. 8. During actual communication, corresponding processing may be performed based on an evaluation result.

5. At a moment t5, the terminal device determines, based on scheduling by the network device, panel selection, uplink power control, and the like, that two energy blocks need to be sent on panel#1 and one energy block needs to be sent on panel#2.

It is assumed that, based on the MPE evaluation, the energy block cannot be sent on panel#1.

In a possible implementation, after power reduction, the terminal device may send no energy block on panel#1, but send one energy block on panel#2.

In another possible implementation, after power reduction, the terminal device may send no energy block on panel#1. In addition, considering that the no human body approaches panel#2, the terminal device may directly choose to send three energy blocks (that is, one energy block of panel#2 plus the two energy blocks backed off from panel#1) on panel#2.

In still another possible implementation, after power reduction, the terminal device may send no energy block on panel#1, and re-evaluate a transmission effect of sending the three energy blocks by using panel#2. In a possible case, after evaluation, the terminal device considers that the three energy blocks can be sent by using panel#2. Based on this case, the terminal device chooses to send no energy block on panel#1, and send the three energy blocks on panel#2. In this manner, communication performance can also be ensured while the MPE requirement is met as much as possible.

It should be understood that only a case in which three energy blocks are sent on panel#2 is listed in FIG. 8. During actual communication, corresponding processing may be performed based on an evaluation result.

6. At a moment t6, the terminal device determines, based on scheduling by the network device, panel selection, uplink power control, and the like, that two energy blocks need to be sent on panel#2.

7. At a moment t7, the terminal device determines, based on scheduling by the network device, panel selection, uplink power control, and the like, that four energy blocks need to be sent on panel#1.

At the moment t7, if the sensor does not sense that a human body approach panel#1 and panel#2, the terminal device can normally perform communication by using panel#1 and panel#2, and does not need to determine the MPE problem.

Based on the foregoing solution, a panel-based or beam-based dynamic MPE management mechanism may be implemented. For example, when a sensor senses that a human body approaches at least one beam or panel, the terminal device can perform management and monitoring based on corresponding management information. Therefore, under a condition that the MPE constraint is met, unnecessary monitoring can be reduced, to reduce costs and improve system efficiency.

Based on solution 1, a more detailed MPE management mechanism is provided to enhance system reliability and improve system efficiency under a condition of the MPE constraint is met.

### Solution 2

The terminal device maintains a set of radiant intensity management information for all beams or all panels. For example, the terminal device maintains a set of MPE management information for all beams or all panels, or the terminal device maintains a set of MPE constraint management for all beams or all panels. It may be understood that all the beams or all the panels represent all activated beams or all activated panels.

The MPE management information maintained by the terminal device for all the beams or all the panels may include, for example, but is not limited to: a start position of a time window, a window length L of the time window, a sliding distance S of the time window, a quantity N of sampling points in the time window, a radiant intensity threshold or derived value, a transmitted power threshold, a transmitted power reduced range, an energy threshold, and an energy reduced range.

The time window, for example, may also be referred to as an evaluation window and indicates that the terminal device evaluates, in time windows corresponding to all the beams or all the panels, whether an MPE problem occurs on a beam or a panel in all the beams or all the panels.

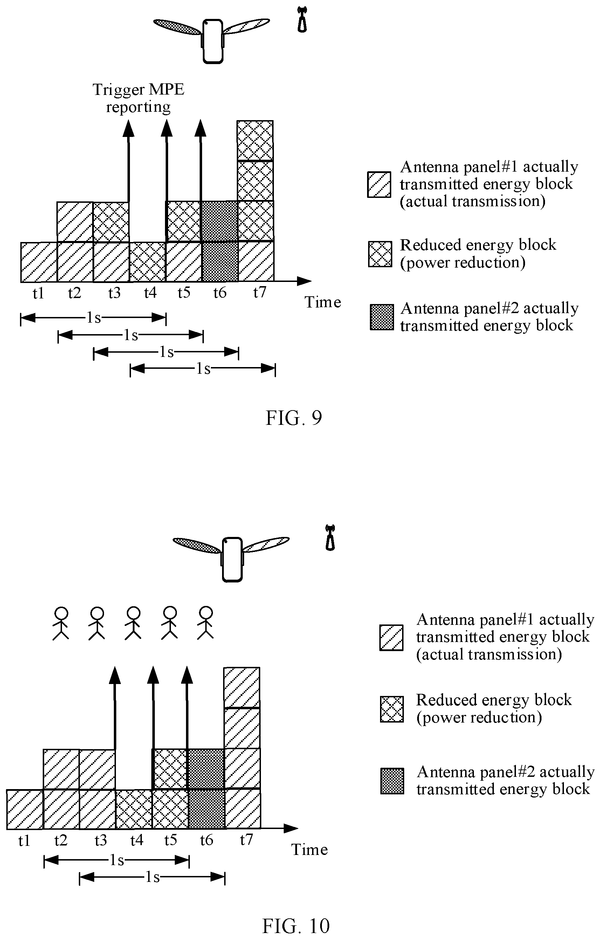

A specific length of the window length L of the time window (that is, a time length) may be pre-specified, for example, predefined in a protocol; or the time window may be notified by the network device to the terminal device, or the time window may be a time window estimated by the terminal device based on a radiant intensity; or the time window may be a default value, for example, ranging from 1 second (s) to 6 minutes (min). FIG. 9 and FIG. 10 are used as examples. A window length L of each time window is 1s.

The sliding distance S of the time window may be understood as an interval between start time of adjacent time windows. FIG. 9 and FIG. 10 are used as examples. A sliding distance of the time window is 0.25 ms.

The N sampling points in the time window may be understood as a quantity of samples, or whether the MPE problem occurs on the current beam or the current panel is determined based on a quantity of pieces of data.

There are a plurality of implementations for the terminal device to determine whether the MPE problem occurs on the current beam or the current panel. For specific, refer to the descriptions in solution 1. Details are not described herein again.

Optionally, after determining that the MPE problem occurs on the current beam or the current panel, or after determining that the MPE problem is about to occur on the current beam or the current panel, the terminal device can trigger the terminal device to perform MEP reporting.

Optionally, after determining that the MPE problem occurs on the current beam or the current panel, the terminal device may perform one or more of the following processing: reducing transmitted power, reducing an uplink transmission duty cycle, and switching a beam or panel.

The following describes a procedure applicable to solution 2 with reference to FIG. 9 and FIG. 10.

FIG. 9 shows non-sensor-based MPE constraint management, and FIG. 10 shows sensor-based MPE constraint management. It is assumed that a window length L of a time window is equal to 1s, a sliding distance S of the time window is equal to 0.25 ms, and N sampling points in the time window are equal to 4. It is assumed that up to four energy blocks are transmitted by the terminal device, that is, up to four energy blocks can be generated when the terminal device transmits data. It is assumed that a quantity of currently activated panels is 2, and the two activated panels include panel#1 and panel#2.

First, FIG. 9 is used as an example for description.

FIG. 9 shows non-sensor-based MPE constraint management. In other words, the terminal device calculates average power or energy of all the N sampling points in the time window based on the sliding distance S of the time window.
1. At a moment t1, the terminal device chooses, based on panel selection, to send one energy block on panel#1.
   The one energy block meets scheduling by the network device and uplink power control by the terminal device. In other words, at the moment t1, based on scheduling by the network device, the terminal device needs to send one energy block that is calculated based on power control information.
2. At a moment t2, the terminal device chooses, based on panel selection, to send two energy blocks on panel#1.
   The two energy blocks meet scheduling by the network device and uplink power control by the terminal device. In other words, at the moment t2, based on scheduling by the network device, the terminal device needs to send two energy blocks that are calculated based on the power control information.
3. At a moment t3, the terminal device determines, based on scheduling by the network device, panel selection, uplink power control, and the like, that two energy blocks need to be sent on panel#1.

It is assumed that, based on MPE evaluation, only one energy block can be sent on panel#1 and panel#2, that is, one energy block needs to be backed off.

In a possible implementation, after power reduction, the terminal device can send one energy block on panel#1.

In another possible implementation, after power reduction, the terminal device can re-evaluate transmission effects of sending by using the current panel and sending by using another panel. For example, the terminal device can re-evaluate transmission effects of sending only one energy block by using panel#1 and sending one energy block by using panel#2. In a possible case, after evaluation, the terminal device considers that it is also optimal that only one energy block is sent on panel#1, because panel#1 faces the network device, and panel#2 faces away the network device. Based on this case, the terminal device chooses to send one energy block on panel#1. In this manner, communication performance can also be ensured while the MPE requirement is met as much as possible.

It should be understood that only a case in which one energy block is sent on panel#1 is listed in FIG. 9. During actual communication, corresponding processing may be performed based on an evaluation result.

4. At a moment t4, if the terminal device determines, based on scheduling by the network device, panel selection, uplink power control, MPE constraint selection, and the like, that there is no remaining energy block to be sent on both panel#1 and panel#2, data cannot be sent at the moment.

5. At a moment t5, similar to the moment t3, the terminal device chooses to send one energy block on panel#1.

6. At a moment t6, there are a total of two remaining energy blocks on panel#1 and panel#2. The terminal device chooses, based on scheduling by the network device, panel selection, uplink power control, an MPE constraint, and the like, to send the two energy blocks on panel#2.

For example, as the terminal device rotates or a communication environment changes, panel#2 is better than panel#1, that is, the terminal device chooses to use panel#2.

7. At a moment t7, there is a total of one remaining energy block on panel#1 and panel#2, and the terminal device sends one energy block on panel#1 (three energy blocks are backed off).

Based on the foregoing solution, a panel-based or beam-based semi-static MPE management mechanism may be implemented. For example, the terminal device can perform management and monitoring based on corresponding management information. Therefore, panel-based or beam-based monitoring and management may be implemented without using a sensor, thereby reducing implementation complexity and costs.

Next, FIG. 10 is used as an example for description.

FIG. 10 shows sensor-based MPE constraint management. To be specific, when sensing, by using a sensor, that a human body approaches at least one beam or panel, the terminal device calculates average power or energy of all the N sampling points in the time window based on the sliding distance S of the time window of the corresponding beam or panel.
1. At a moment t1, the terminal device chooses, based on panel selection, to send one energy block on panel#1.

The one energy block meets scheduling by the network device and uplink power control by the terminal device. In other words, at the moment t1, based on scheduling by the network device, the terminal device needs to send one energy block that is calculated based on power control information.

At the moment t1, if the sensor does not sense that a human body approaches panel#1 and/or panel#2, the terminal device can normally perform communication by using panel#1 and panel#2, and does not need to determine the MPE problem.

2. At a moment t2, the terminal device chooses, based on panel selection, to send two energy blocks on panel#1.

At the moment t2, the sensor senses that a human body approaches panel#1 or panel#2, and the MPE problem on panel#1 and panel#2 is determined. The two energy blocks meet scheduling by the network device, uplink power control by the terminal device, MPE constraint selection, and the like. In other words, at the moment t2, the terminal device chooses, based on scheduling by the network device, panel selection, uplink power control, MPE constraint and selection, and the like, to send two energy blocks on panel#1.

3. At a moment t3, the terminal device chooses, based on panel selection, to send two energy blocks on panel#1.

The two energy blocks meet scheduling by the network device, uplink power control by the terminal device, MPE constraint selection, and the like.

4. At a moment t4, if the sensor senses that a human body approaches panel#1 and/or panel#2, the terminal device needs to determine the MPE problem on panel#1 and panel#2. It is assumed that the terminal device determines, based on scheduling by the network device, panel selection, uplink power control, MPE constraint selection, and the like, that there is no remaining energy block to be sent on both panel#1 and panel#2, data cannot be sent at the moment.

5. At a moment t5, if the sensor senses that a human body approaches panel#1 and/or panel#2, the terminal device needs to determine the MPE problem on panel#1 and panel#2. It is assumed that the terminal device determines, based on scheduling by the network device, panel selection, uplink power control, MPE constraint selection, and the like, that there is no remaining energy block to be sent on both panel#1 and panel#2, data cannot be sent at the moment.

6. At a moment t6, the terminal device determines, based on scheduling by the network device, panel selection, uplink power control, MPE constraint and selection, and the like, that two energy blocks need to be sent on panel#2.

7. At a moment t7, the terminal device determines, based on scheduling by the network device, panel selection, uplink power control, and the like, that four energy blocks need to be sent on panel#2.

At the moment t7, if the sensor does not sense that a human body approaches panel#1 and panel#2, the terminal device can normally perform communication by using panel#1 and panel#2, and does not need to determine the MPE problem.

Based on the foregoing solution, a panel-based or beam-based dynamic MPE management mechanism may be implemented. For example, when a sensor senses that a human body approaches at least one beam or panel, the terminal device can perform management and monitoring based on corresponding management information. Therefore, under a condition that the MPE constraint is met, unnecessary monitoring can be reduced, to reduce costs and improve system efficiency.

Based on the solution 2, a simplified MPE management mechanism is provided to simplify management of the terminal device, and the system reliability is enhanced and the system efficiency is improved under a condition of the MPE constraint is met.

It should be understood that, in some of the foregoing embodiments, when the radiant intensity exceeds or is about to exceed the regulation constraint, power reduction is used as an example for description. However, this does not constitute a limitation on this application. Any processing manner that can reduce the radiant intensity is applicable to embodiments of this application.

It should be further understood that in some of the foregoing embodiments, the MPE constraint is used as an example for description, but this does not constitute a limitation on this application. Any constraint that can represent a radiant intensity is applicable to embodiments of this application, for example, an SAR constraint.

It should be further understood that the foregoing embodiments are mainly described by using an example in which the terminal device communicates with the network device by using a beam and/or a panel. This is not limited. The solutions in embodiment of this application may also be applicable to a scenario in which the terminal device communicates with the network device by using an antenna at a low frequency.

Based on the foregoing technical solution, a radiant intensity reporting mechanism is provided. To be specific, an uplink signal is used to notify information about a radiant intensity, for example, an uplink signal in an existing procedure is reused or an uplink signal specially used to notify a radiant intensity is designed; or panel deactivation signaling is sent. This can not only improve reporting reliability and enhance system robustness, but also reduce signaling overheads. In addition, in some solutions, it can be further ensured that a receive beam and a transmit beam of the network device are aligned with those of the terminal device, thereby ensuring system performance.

In addition, based on the foregoing technical solutions, a more detailed management mechanism related to a radiant intensity is further provided. To be specific, the terminal device maintains a set of management information for each activated beam or panel, that is, a beam-based or panel-based monitoring management mechanism. Therefore, the system reliability is enhanced and the system efficiency is improved under a condition that the MPE constraint is met. In addition, in some solutions, panel-based or beam-based monitoring and management may be implemented without using a sensor, thereby reducing hardware complexity and costs.

In addition, based on the foregoing technical solutions, a simplified management mechanism related to the radiant intensity is further provided. To be specific, the terminal device maintains a set of management information for all activated beams or all activated panels, that is, a beam-based or panel-based monitoring management mechanism. Therefore, management of the terminal device is simplified, and system reliability is enhanced and system efficiency is improved under a condition that an MPE constraint is met. In addition, in some solutions, panel-based or beam-based monitoring and management may be implemented without using a sensor, thereby reducing hardware complexity and costs.

Embodiments described in this specification may be independent solutions, or may be combined based on internal logic. All these solutions fall within the protection scope of this application. For example, the MPE management mechanism and the MPE reporting mechanism may be used in combination. For example, management is performed based on the MPE management mechanism, and after MPE reporting is triggered, reporting is performed based on the MPE reporting mechanism.

It may be understood that, in the foregoing method embodiments, the methods and the operations implemented by the terminal device may alternatively be implemented by a component (for example, a chip or a circuit) used in the terminal device, and the methods and the operations implemented by the network device may alternatively be implemented by a component (for example, a chip or a circuit) used in the network device.

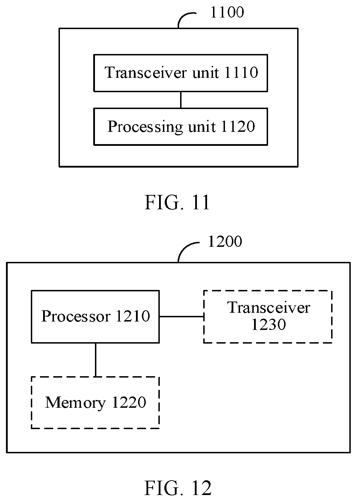

The method provided in embodiments of this application is described above in detail with reference to FIG. 2 to FIG. 10. Communication apparatuses provided in embodiments of this application are described in detail below with reference to FIG. 11 to FIG. 14. It should be understood that descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from the perspective of interaction between network elements. It may be understood that, to implement the foregoing functions, each network element, for example, a transmit end device or a receive end device, includes a corresponding hardware structure and/or software module for implementing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, division into functional modules may be performed on the transmit end device or the receive end device based on the foregoing method examples. For example, various functional modules may be divided based on corresponding functions, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. An example in which each functional module is obtained through division based on each corresponding function is used below for description.

FIG. 11 is a schematic block diagram of a communication apparatus according to an embodiment of this application. The communication apparatus 1100 includes a transceiver unit 1110 and a processing unit 1120. The transceiver unit 1110 may implement a corresponding communication function, and the processing unit 1110 is configured to process data. The transceiver unit 1110 may also be referred to as a communication interface or a communication unit.

Optionally, the communication apparatus 1100 may further include a storage unit. The storage unit may be configured to store instructions and/or data. The processing unit 1120 may read the instructions and/or the data in the storage unit, so that the communication apparatus implements the foregoing method embodiments.

The communication apparatus 1100 may be configured to perform the actions performed by the terminal device in the foregoing method embodiments. In this case, the communication apparatus 1100 may be the terminal device or a component that may be configured in the terminal device. The transceiver unit 1110 is configured to perform the receiving/sending-related operations on the terminal device side in the foregoing method embodiments. The processing unit 1120 is configured to perform the processing-related operations on the terminal device side in the foregoing method embodiments.

Alternatively, the communication apparatus 1100 may be configured to perform the actions performed by the network device in the foregoing method embodiments. In this case, the communication apparatus 1100 may be the network device or a component that may be configured in the network device. The transceiver unit 1110 is configured to perform the receiving/sending-related operations on the network device side in the foregoing method embodiments. The processing unit 1120 is configured to perform the processing-related operations on the network device side in the foregoing method embodiments.

In a design, the communication apparatus 1100 is configured to perform the actions performed by the terminal device in the foregoing method embodiments.

In an implementation, the processing unit 1120 is configured to determine a transmit beam of each of a plurality of uplink reference signals. The transceiver unit 1110 is configured to transmit the plurality of uplink reference signals by using transmit beams of the plurality of uplink reference signals, where power reduction is performed on a transmit beam corresponding to at least one of the plurality of uplink reference signals.

For example, the processing unit 1120 is specifically configured to: determine the transmit beam of each of the plurality of uplink reference signals when a preset condition is met.

For another example, the preset condition is that a radiant intensity risk occurs.

For still another example, the processing unit 1120 is further configured to determine a transmit beam of uplink data from the transmit beams of the plurality of uplink reference signals.

For still another example, the transmit beam of the uplink data is any one of the following: a transmit beam with best beam quality in the transmit beams of the plurality of uplink reference signals; or a transmit beam with power reduction in the transmit beams of the plurality of uplink reference signals; or a transmit beam without power reduction in the transmit beams of the plurality of uplink reference signals.

For still another example, the plurality of uplink reference signals are used for any one of the following: channel measurement, beam management, codebook-based transmission, non-codebook-based transmission, an antenna switching function, a carrier switching function, uplink and downlink channels reciprocity detection, or information specially used to indicate a radiant intensity.

For still another implementation, the processing unit 1120 is configured to obtain radiant intensity management information, where the radiant intensity management information is used to determine whether a maximum permissible exposure MPE problem occurs on N beams and/or M antenna panels, and M and N are integers greater than 1 or equal to 1; the transceiver unit 1110 is configured to communicate with a network device by using a first beam and/or a first antenna panel; and the processing unit 1120 is further configured to determine, based on the radiant intensity management information, whether the MPE problem occurs on the first beam and/or the first antenna panel, where the N beams include the first beam, and the M antenna panels include the first antenna panel.

For example, the radiant intensity management information includes one set of management information, and all the N beams and/or the M antenna panels correspond to the one set of management information; or the radiant intensity management information includes a plurality of sets of management information, and all the N beams and/or the M antenna panels are in a one-to-one correspondence with the plurality of sets of management information.

For still another example, the radiant intensity management information includes one or more of the following: a start position of a time window, a window length of the time window, a sliding distance of the time window, a quantity of sampling points in the time window, a radiant intensity threshold or derived value, a transmitted power threshold, a transmitted power reduced range, an energy threshold, and an energy reduced range, where the time window represents a time window for monitoring whether an MPE problem occurs on a beam and/or an antenna panel.

For still another example, the processing unit 1120 is specifically configured to: when it is detected that a human body approaches the first beam and/or the first antenna panel, determine, based on the radiant intensity management information, whether the MPE problem occurs on the first beam and/or the first antenna panel.

For still another example, after it is determined that the MPE problem occurs on the first beam and/or the first antenna panel, the transceiver unit 1110 is configured to choose to send data by using a second beam set and/or a second antenna panel set; and/or the processing unit 1120 is configured to reduce transmitted power used when the first beam and/or the first antenna panel are/is used to send the data.

In another implementation, the transceiver unit 1110 is configured to communicate with the network device by using a first beam and/or a first antenna panel; the processing unit 1120 is configured to determine that a maximum permissible exposure MPE problem occurs or is about to occur; and the transceiver unit 1110 is configured to transmit uplink signaling to the network device, where the uplink signaling is used to notify deactivation of the first antenna panel.

The communication apparatus 1100 may implement the steps or the procedures performed by the terminal device in the method embodiments according to embodiments of this application. The communication apparatus 1100 may include units configured to perform the methods performed by the terminal device shown in FIG. 2 to FIG. 10. In addition, the foregoing and other operations and/or functions of the units in the communication apparatus 1100 are respectively intended to implement corresponding procedures shown in FIG. 2 to FIG. 10

When the communication apparatus 1100 is configured to perform the method 200 in FIG. 2, the transceiver unit 1110 may be configured to perform step 201, step 211, or step 212 in the method 200.

When the communication apparatus 1100 is configured to perform the method 300 in FIG. 3, the transceiver unit 1110 may be configured to perform step 310 in the method 300, and the processing unit 1120 may be configured to perform step 301 in the method 300.

It should be understood that a specific process in which the units perform the foregoing corresponding steps has been described in detail in the foregoing method embodiments. For brevity, details are not described herein again.

In another design, the communication apparatus 1100 is configured to perform the actions performed by the network device in the foregoing method embodiments.

In an implementation, the transceiver unit 1110 is configured to receive a plurality of uplink reference signals, where each uplink reference signal is transmitted by using a corresponding transmit beam; and the processing unit 1120 is configured to determine power reduction information of at least one of the plurality of uplink reference signals based on measurement results of the plurality of uplink reference signals.

For example, the processing unit 1120 is specifically configured to: determine, based on the plurality of uplink reference signals, beam quality of a plurality of transmit beams corresponding to the plurality of uplink reference signals; and determine the power reduction information of the at least one of the plurality of uplink reference signals based on the determined beam quality of the plurality of transmit beams and stored beam quality of the plurality of transmit beams.

For still another example, the stored beam quality of each transmit beam is determined based on a corresponding downlink reference signal.

For still another example, the processing unit 1120 is further configured to determine a transmit beam of uplink data based on the determined beam quality of the plurality of transmit beams.

For still another example, the transmit beam of the uplink data is any one of the following: a transmit beam with best beam quality in the plurality of transmit beams; or a transmit beam with power reduction in the plurality of transmit beams; or a transmit beam without power reduction in the plurality of transmit beams.

In still another implementation, the transceiver unit 1110 is configured to receive uplink signaling from a terminal device, where the uplink signaling is used to notify deactivation of the first antenna panel; and the processing unit 1120 is configured to determine, based on the uplink signaling, that a maximum permissible exposure MPE problem occurs or is about to occur when the terminal device performs communication by using the first antenna panel.

The communication apparatus 1100 may implement the steps or the procedures performed by the network device in the method embodiments according to embodiments of this application. The communication apparatus 1100 may include units configured to perform the methods performed by the network device in the method embodiments. In addition, the foregoing and other operations and/or functions of the units in the communication apparatus 1100 are respectively intended to implement corresponding procedures in the method embodiments.

When the communication apparatus 1100 is configured to perform the method 200 in FIG. 2, the transceiver unit 1110 may be configured to perform step 201, step 211, or step 212 in the method 200.

When the communication apparatus 1100 is configured to perform the method 300 in FIG. 3, the transceiver unit 1110 may be configured to perform step 310 in the method 300, and the processing unit 1120 may be configured to perform step 320 in the method 300.

The processing unit 1120 in the foregoing embodiments may be implemented by at least one processor or a processor-related circuit. The transceiver unit 1110 may be implemented by using a transceiver or a transceiver-related circuit. The transceiver unit 1110 may also be referred to as a communication unit or a communication interface. The storage unit may be implemented by at least one memory.

As shown in FIG. 12, an embodiment of this application further provides a communication apparatus 1200. The communication apparatus 1200 includes a processor 1210. The processor 1210 is coupled to a memory 1220. The memory 1220 is configured to store a computer program or instructions and/or data. The processor 1210 is configured to execute the computer program or the instructions and/or the data stored in the memory 1220, so that the methods in the foregoing method embodiments are performed.

Optionally, there are one or more processors 1210 included in the communication apparatus 1200.

Optionally, as shown in FIG. 12, the communication apparatus 1200 may further include the memory 1220.

Optionally, there may be one or more memories 1220 included in the communication apparatus 1200.

Optionally, the memory 1220 may be integrated with the processor 1210, or separately disposed.

Optionally, as shown in FIG. 12, the communication apparatus 1200 may further include a transceiver 1230. The transceiver 1230 is configured to receive and/or send a signal. For example, the processor 1210 is configured to control the transceiver 1230 to receive and/or send a signal.

In a solution, the communication apparatus 1200 is configured to implement the operations performed by the terminal device in the foregoing method embodiments.

For example, the processor 1210 is configured to implement processing-related operations performed by the terminal device in the foregoing method embodiments, and the transceiver 1230 is configured to implement receiving/sending-related operations performed by the terminal device in the foregoing method embodiments.

In another solution, the communication apparatus 1200 is configured to perform the operations performed by the network device in the foregoing method embodiments.

For example, the processor 1210 is configured to perform processing-related operations performed by the network device in the foregoing method embodiments, and the transceiver 1230 is configured to perform receiving/sending-related operations performed by the network device in the foregoing method embodiments.

An embodiment of this application further provides a communication apparatus 1300. The communication apparatus 1300 may be a terminal device or a chip. The communication apparatus 1300 may be configured to perform the actions performed by the terminal device in the foregoing method embodiments.

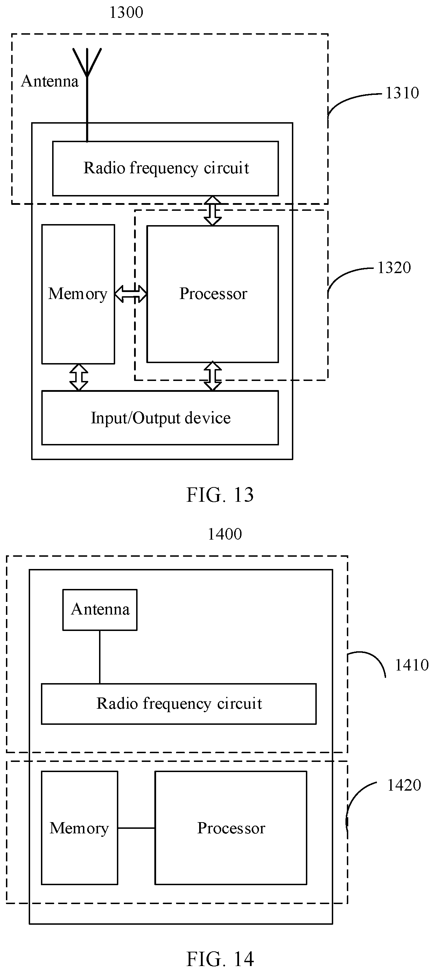

When the communication apparatus 1300 is the terminal device, FIG. 13 is a schematic diagram of a structure of a simplified terminal device. As shown in FIG. 13, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store a software program and data. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data entered by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor, and the processor converts the baseband signal into data and processes the data. For ease of description, FIG. 13 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device.

As shown in FIG. 13, the terminal device includes a transceiver unit 1310 and a processing unit 1320. The transceiver unit 1310 may also be referred to as a transceiver, a transceiver machine, a transceiver apparatus, or the like. The processing unit 1320 may also be referred to as a processor, a processing board, a processing module, a processing apparatus, or the like.

Optionally, a component that is in the transceiver unit 1310 and that is configured to implement the receiving function may be considered as a receiving unit, and a component that is in the transceiver unit 1310 and that is configured to implement the sending function may be considered as a sending unit. In other words, the transceiver unit 1310 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit may also be sometimes referred to as a transmitting machine, a transmitter, a transmit circuit, or the like.

For example, in an implementation, the processing unit 1320 is configured to the processing actions on the terminal device side in FIG. 2 to FIG. 10. For example, the processing unit 1320 is configured to perform the processing steps in FIG. 2, and the transceiver unit 1310 is configured to perform the receiving and sending operations in step 201, step 211, or step 212 in FIG. 2.

For another example, in an implementation, the processing unit 1320 is configured to perform the processing step in step 301 in FIG. 3, and the transceiver unit 1310 is configured to perform the sending and receiving operations in step 310 in FIG. 3.

It should be understood that FIG. 13 is merely an example instead of a limitation. The terminal device including the transceiver unit and the processing unit may not depend on the structure shown in FIG. 13.

When the communication apparatus 1300 is the chip, the chip includes a transceiver unit and a processing unit. The transceiver unit may be an input/output circuit or a communication interface. The processing unit may be a processor, a microprocessor, or an integrated circuit that is integrated on the chip.

An embodiment of this application further provides a communication apparatus 1400. The communication apparatus 1400 may be a network device or a chip. The communication apparatus 1400 may be configured to perform the operations performed by the network device in the foregoing method embodiments.

The communication apparatus 1400 may be the network device, for example, a base station. FIG. 14 is a schematic diagram of a structure of a simplified base station. The base station includes a part 1410 and a part 1420. The part 1410 is mainly configured to: receive and send a radio frequency signal, and perform conversion between the radio frequency signal and a baseband signal. The part 1420 is mainly configured to: perform baseband processing, control the base station, and the like. The part 1410 may usually be referred to as a transceiver unit, a transceiver machine, a transceiver circuit, a transceiver, or the like. The part 1420 is usually a control center of the base station, may be usually referred to as a processing unit, and is configured to control the base station to perform the processing operations on the network device side in the foregoing method embodiments.

The transceiver unit in the part 1410 may also be referred to as a transceiver machine or a transceiver or the like. The transceiver unit includes an antenna and a radio frequency circuit, where the radio frequency circuit is mainly configured to perform radio frequency processing. Optionally, a component that is in the part 1410 and that is configured to implement a receiving function may be considered as a receiving unit, and a component that is in the part 1410 and that is configured to implement a sending function may be considered as a sending unit. In other words, the part 1410 includes the receiving unit and the sending unit. The receiving unit may also be referred to as a receiver machine, a receiver, a receiver circuit, or the like. The sending unit may be referred to as a transmitter machine, a transmitter, a transmitter circuit, or the like.

The part 1420 may include one or more boards, and each board may include one or more processors and one or more memories. The processor is configured to read and execute a program in the memory to implement a baseband processing function and control the base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the transceiver unit in the part 1410 is configured to perform the receiving/sending-related steps performed by the network device in the embodiments shown in FIG. 2 to FIG. 10; and the part 1420 is configured to perform the processing-related steps performed by the network device in the embodiments shown in FIG. 2 to FIG. 10.

For example, in an implementation, the transceiver unit in the part 1410 is configured to perform the receiving/sending-related step performed by the network device in the embodiment shown in FIG. 2; and the part 1420 is configured to perform the processing-related step performed by the network device in the embodiment shown in FIG. 2.

It should be understood that FIG. 14 is merely an example instead of a limitation. The network device including the transceiver unit and the processing unit may not depend on the structure shown in FIG. 14.

When the communication apparatus 1400 is the chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a computer-readable storage medium. The computer-readable storage medium stores computer instructions used to implement the method performed by the terminal device or the method performed by the network device in the foregoing method embodiments.

For example, when the computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

It may be clearly understood by a person skilled in the art that, for convenience and brief description, for explanations and beneficial effects of related content in any communication apparatus provided above, refer to the corresponding method embodiment provided above. Details are not described herein again.

In this embodiment of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a windows operating system. The application layer may include applications such as a browser, an address book, word processing software, and instant messaging software.

A specific structure of an execution body of a method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by a terminal device, a network device, or a function module that is in a terminal device or a network device and that can invoke and execute the program.

Aspects or features of this application may be implemented as a method, an apparatus, or a product that uses standard programming and/or engineering technologies. The term "product" used in this specification may cover a computer program that can be accessed from any computer-readable component, carrier or medium.

The computer-readable storage medium may be any usable medium accessible by a computer, or a data storage device, such as a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid state disk (solid state disk, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that the processor mentioned in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

In the several embodiments provided in this application, it should be understood that the disclosed apparatuses and methods may be implemented in other manners. For example, the foregoing apparatus embodiments are only examples. For example, division into the foregoing units is only logical function division, and may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, function units in embodiments of this application may be integrated into one unit, or each of the units may exist alone physically, or two or more units are integrated into one unit.

All or some of the foregoing embodiments may be implemented by using software, hardware, firmware, or any combination thereof.

When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application which is subject to the protection scope of the claims and this specification.

## Claims

1. A beam measurement method (300), comprising:
receiving a plurality of uplink reference signals (310), wherein each uplink reference signal is transmitted by using a corresponding transmit beam; and
determining (320) power reduction information of at least one of the plurality of uplink reference signals based on measurement results of the plurality of uplink reference signals,
**characterized in that** the determining power reduction information of at least one of the plurality of uplink reference signals based on measurement results of the plurality of uplink reference signals comprises:
determining beam quality of a plurality of transmit beams corresponding to the plurality of uplink reference signals based on the plurality of uplink reference signals; and
determining the power reduction information of the at least one of the plurality of uplink reference signals based on the determined beam quality of the plurality of transmit beams and stored beam quality of the plurality of transmit beams, wherein the stored beam quality of the plurality of transmit beams is a beam quality of the plurality of transmit beams stored during a historical communication.

2. The method (300) according to claim 1, further comprising:
determining a transmit beam of uplink data based on the determined beam quality of the plurality of transmit beams.

3. The method (300) according to claim 2, wherein the transmit beam of the uplink data is any one of the following:
a transmit beam with best beam quality in the plurality of transmit beams; or
a transmit beam with power reduction in the plurality of transmit beams; or
a transmit beam without power reduction in the plurality of transmit beams.

4. A communication apparatus being configured to carry out the method according to any one of claims 1 to 3.

5. The communication apparatus according to claim 4, wherein the communication apparatus is a chip, comprising a processor and an interface, and configured to invoke, from a memory, a computer program stored in the memory, and run the computer program, to perform the method according to any one of claims 1 to 3.

6. A computer-readable storage medium, storing a computer program, wherein when the computer program is executed by a communication apparatus, the communication apparatus is enabled to perform the method according to any one of claims 1 to 3.

7. A computer program product, comprising a computer program, wherein when the computer program is run on a computer, the computer is enabled to perform the method according to any one of claims 1 to 3.

## Patentansprüche

1. Verfahren zur Strahlmessung (300), umfassend:
Empfangen einer Vielzahl von Uplink-Referenzsignalen (310), wobei jedes Uplink-Referenzsignal unter Verwendung eines entsprechenden Übertragungsstrahls übertragen wird; und
Bestimmen (320) von Leistungsreduzierungsinformationen von mindestens einem der Vielzahl von Uplink-Referenzsignalen basierend auf Messergebnissen der Vielzahl von Uplink-Referenzsignalen,
**dadurch gekennzeichnet, dass** das Bestimmen der Leistungsreduzierungsinformationen von mindestens einem der Vielzahl von Uplink-Referenzsignalen basierend auf Messergebnissen der Vielzahl von Uplink-Referenzsignalen Folgendes umfasst:
Bestimmen der Strahlqualität einer Vielzahl von Übertragungsstrahlen, die der Vielzahl von Uplink-Referenzsignalen entspricht, basierend auf der Vielzahl von Uplink-Referenzsignalen; und
Bestimmen der Leistungsreduzierungsinformationen des mindestens einen der Vielzahl von Uplink-Referenzsignalen basierend auf der bestimmten Strahlqualität der Vielzahl von Übertragungsstrahlen und der gespeicherten Strahlqualität der Vielzahl von Übertragungsstrahlen, wobei die gespeicherte Strahlqualität der Vielzahl von Übertragungsstrahlen eine Strahlqualität der Vielzahl von Übertragungsstrahlen ist, die während einer historischen Kommunikation gespeichert wird.

2. Verfahren (300) gemäß Anspruch 1, ferner umfassend:
Bestimmen eines Übertragungsstrahls von Uplink-Daten basierend auf der bestimmten Strahlqualität der Vielzahl von Übertragungsstrahlen.

3. Verfahren (300) gemäß Anspruch 2, wobei der Übertragungsstrahl der Uplink-Daten einer der folgenden ist:
ein Übertragungsstrahl mit der besten Strahlqualität unter der Vielzahl von Übertragungsstrahlen; oder
ein Übertragungsstrahl mit Leistungsreduzierung unter der Vielzahl von Übertragungsstrahlen; oder
ein Übertragungsstrahl ohne Leistungsreduzierung unter der Vielzahl von Übertragungsstrahlen.

4. Kommunikationsvorrichtung, die dazu konfiguriert ist, das Verfahren gemäß einem der Ansprüche 1 bis 3 durchzuführen.

5. Kommunikationsvorrichtung gemäß Anspruch 4, wobei die Kommunikationsvorrichtung ein Chip ist, der einen Prozessor und eine Schnittstelle umfasst und dazu konfiguriert ist, aus einem Speicher ein in dem Speicher gespeichertes Computerprogramm aufzurufen und das Computerprogramm auszuführen, um das Verfahren gemäß einem der Ansprüche 1 bis 3 durchzuführen.

6. Computerlesbares Speichermedium, das ein Computerprogramm speichert, wobei, wenn das Computerprogramm durch eine Kommunikationsvorrichtung ausgeführt wird, die Kommunikationsvorrichtung in die Lage versetzt wird, das Verfahren gemäß einem der Ansprüche 1 bis 3 durchzuführen.

7. Computerprogrammprodukt, das ein Computerprogramm umfasst, wobei, wenn das Computerprogramm auf einem Computer ausgeführt wird, der Computer in die Lage versetzt wird, das Verfahren gemäß einem der Ansprüche 1 bis 3 durchzuführen.

## Revendications

1. Procédé de mesure de faisceau (300), comprenant :
la réception d'une pluralité de signaux de référence de liaison montante (310), dans lequel chaque signal de référence de liaison montante est transmis à l'aide d'un faisceau de transmission correspondant ; et
la détermination (320) des informations de réduction de puissance d'au moins l'un de la pluralité de signaux de référence de liaison montante sur la base des résultats de mesure de la pluralité de signaux de référence de liaison montante,
**caractérisé en ce que** la détermination des informations de réduction de puissance d'au moins l'un de la pluralité de signaux de référence de liaison montante sur la base des résultats de mesure de la pluralité de signaux de référence de liaison montante comprend :
la détermination de la qualité du faisceau d'une pluralité de faisceaux de transmission correspondant à la pluralité de signaux de référence de liaison montante sur la base de la pluralité de signaux de référence de liaison montante ; et
la détermination des informations de réduction de puissance de l'au moins l'un de la pluralité de signaux de référence de liaison montante sur la base de la qualité de faisceau déterminée de la pluralité de faisceaux de transmission et de la qualité de faisceau stockée de la pluralité de faisceaux de transmission, dans lequel la qualité de faisceau stockée de la pluralité de faisceaux de transmission est une qualité de faisceau de la pluralité de faisceaux de transmission stockée pendant une communication historique.

2. Procédé (300) selon la revendication 1, comprenant également :
la détermination d'un faisceau de transmission de données de liaison montante sur la base de la qualité de faisceau déterminée de la pluralité de faisceaux de transmission.

3. Procédé (300) selon la revendication 2, dans lequel le faisceau de transmission des données de liaison montante est l'un quelconque :
d'un faisceau de transmission avec la meilleure qualité de faisceau dans la pluralité de faisceaux de transmission ; ou
d'un faisceau de transmission avec réduction de puissance dans la pluralité de faisceaux de transmission ; ou
d'un faisceau de transmission sans réduction de puissance dans la pluralité de faisceaux de transmission.

4. Appareil de communication étant configuré pour mettre en œuvre le procédé selon l'une quelconque des revendications 1 à 3.

5. Appareil de communication selon la revendication 4, dans lequel l'appareil de communication est une puce, comprenant un processeur et une interface, et configuré pour invoquer, à partir d'une mémoire, un programme informatique stocké dans la mémoire, et pour exécuter le programme informatique, pour réaliser le procédé selon l'une quelconque des revendications 1 à 3.

6. Support de stockage lisible par ordinateur, stockant un programme informatique, dans lequel lorsque le programme informatique est exécuté par un appareil de communication, l'appareil de communication est activé pour réaliser le procédé selon l'une quelconque des revendications 1 à 3.

7. Produit de programme informatique, comprenant un programme informatique, dans lequel lorsque le programme informatique fonctionne sur un ordinateur, l'ordinateur est activé pour réaliser le procédé selon l'une quelconque des revendications 1 à 3.
